# EUROPEAN PATENT APPLICATION

(11) **EP 4 598 119 A1**
(43) Date of publication of application: **06.08.2025**
(21) Application number: 23870109.8
(22) Date of filing: 29.08.2023
(51) Int. Cl.: H04W 36/00

(54) **CELL HANDOVER METHOD, TERMINAL, NETWORK DEVICE, APPARATUS AND STORAGE MEDIUM**

(30) Priority: 30.09.2022 CN 202211215970; 15.05.2023 CN 202310546505
(71) Applicant: Datang Mobile Communications Equipment Co., Ltd., Beijing 100085 (CN)
(72) Inventor: LUO, Yajuan, Beijing 100085 (CN); GAO, Qiubin, Beijing 100085 (CN); LI, Hui, Beijing 100085 (CN); SU, Xin, Beijing 100085 (CN); WANG, Da, Beijing 100085 (CN)
(74) Representative: Studio Torta S.p.A.
(86) International application number: PCT/CN2023/115469
(87) International publication number: WO 2024/066866

(57) **Abstract**

The embodiments of the present disclosure provide a cell handover method, a terminal, a network device, an apparatus and a storage medium. The method comprises: performing cell measurement on candidate cells, and sending cell measurement results of the candidate cells to a network device, wherein the cell measurement results are used for determining a target cell, and each cell measurement result comprises an absolute value of at least one L1-RSRP and a differential value of the at least one L1-RSRP; receiving cell handover signaling, which is sent by the network device, and determining the target cell indicated by the cell handover signaling, wherein the target cell is one of the candidate cells; and performing cell handover on the basis of configuration information of the target cell.

## Description

### CROSS-REFERENCES TO RELATED APPLICATIONS

The present application claims priority to Chinese Patent Application No. 202211215970.4 filed on September 30, 2022, entitled "Cell Handover Method, Terminal, Network Device, Apparatus and Storage Medium", and Chinese Patent Application No. 2023105465057 filed on May 15, 2023, entitled "Cell Handover Method, Terminal, Network Device, Apparatus and Storage Medium", which are hereby incorporated by reference in their entireties.

### FIELD

The present application relates to the field of communication, and in particular, to methods and apparatuses for cell handover, a user equipment (UE), a network device, and a storage medium.

### BACKGROUND

In a mobile communication system, in case that a user equipment (UE) in a communication state moves from one cell to another cell, or a link quality of a serving cell deteriorates, in order to ensure continuity of communication, the UE needs to be handed over to another cell, and another cell continues to provide service for the UE, that is, a cell handover is performed.

The traditional cell handover procedure is as follows. After receiving a radio resource control (RRC) reconfiguration message (a handover command) sent from a base station, a user equipment (UE) is handed over to a new cell, and then the UE performs RRC reconfiguration processing, downlink synchronization and uplink synchronization. A handover (HO) interruption delay in this handover procedure is large, which may reduce data transmission quality and make it unable to guarantee reliability of a link.

In addition, in the traditional cell handover scheme, cell measurement results of each cell need to be sent to a base station for the base station to determine a target cell. Measurement reporting overhead for the UE is large, which makes it more difficult to guarantee the reliability of the link.

### BRIEF SUMMARY

Embodiments of the present application provide methods and apparatuses for cell handover, a user equipment (UE), a network device, and a storage medium to solve a problem of large cell handover delay or large measurement reporting overhead for a UE in the related art.

An embodiment of the present application provides a method for cell handover, including:
performing cell measurements on preset cells, and sending cell measurement results for the preset cells to a network device;
receiving configuration information of candidate cells sent from the network device, where the candidate cells are determined by the network device from the preset cells based on the cell measurement results;
receiving a cell handover signaling sent from the network device, and determining a target cell indicated by the cell handover signaling, where the target cell is one of the candidate cells; and
performing cell handover based on configuration information of the target cell;
   or,
performing cell measurements on candidate cells, and sending cell measurement results for the candidate cells to a network device, where the cell measurement results are used to determine a target cell;
receiving a cell handover signaling sent from the network device, and determining a target cell indicated by the cell handover signaling, where the target cell is one of the candidate cells; and
performing cell handover based on configuration information of the target cell;
where the cell measurement results include an absolute value of at least one Layer 1 reference signal receiving power (L1-RSRP), and differential values of at least one L1-RSRP.

In an embodiment, according to a cell handover method of an embodiment of the present application, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, according to a cell handover method of an embodiment of the present application, the absolute value of the at least one L1-RSRP includes second absolute values of L L1-RSRPs, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, according to the method for cell handover of an embodiment of the present application, before receiving the cell handover signaling sent from the network device, the method further includes:
receiving configuration information of a transmission configuration indicator (TCI) state of a beam in the candidate cells sent from the network device;
where the determining the target cell indicated by the cell handover signaling includes:
   determining the target cell indicated by the cell handover signaling and a target beam, where the target beam is a beam of which the TCI state is an activated state in the target cell; and
   where the performing the cell handover based on configuration information of the target cell includes:
      performing the cell handover based on the configuration information of the target cell and performing beam switching based on configuration information of a TCI state of the target beam.

In an embodiment, according to a cell handover method of an embodiment of the present application, the cell handover signaling is a first signaling with a first field; and
where the determining the target cell indicated by the cell handover signaling and the target beam includes:
determining a target beam indicated by the first signaling in case that the first field indicates that the first signaling carries information for cell handover; and
determining a cell to which the target beam belongs as the target cell based on the configuration information of the candidate cell.

In an embodiment, according to a cell handover method of an embodiment of the present application, the cell handover signaling is a second signaling with a second field; and
where the determining the target cell indicated by the cell handover signaling and the target beam includes:
determining a target beam indicated by the second signaling and a target cell indicated by the second field in case that the second field indicates that the second signaling carries information for cell handover.

In an embodiment, according to a cell handover method of an embodiment of the present application, the cell handover signaling is a third signaling with a third field; and
where the determining the target cell indicated by the cell handover signaling and the target beam includes:
in case that the third field indicates that the third signaling carries information for cell handover, activating a target TCI state based on the third signaling, and determining the target cell and the target beam based on the target TCI state.

In an embodiment, according to the method for cell handover of an embodiment of the present application, after receiving the configuration information of the TCI state of the beam in the candidate cells sent from the network device, the method further includes:
receiving a TCI state activation signaling sent from the network device; and
activating candidate TCI states indicated by the TCI state activation signaling;
where a number of candidate TCI states indicated by the TCI state activation signaling to be activated is less than or equal to a preset number threshold.

In an embodiment, according to a cell handover method of an embodiment of the present application, the cell handover signaling is a fourth signaling; and
where the determining the target cell indicated by the cell handover signaling includes:
determining a cell indicated by the fourth signaling to be activated as the target cell.

In an embodiment, according to the method for cell handover of an embodiment of the present application, after performing cell handover based on the configuration information of the target cell, the method further includes:
before receiving a beam switching signaling sent from the network device, determining a default beam for the target cell, and performing information transmission based on the default beam.

In an embodiment, according to the method for cell handover of an embodiment of the present application, determining the default beam for the target cell includes:
determining a beam used for transmitting a synchronization signal block (SSB) in the target cell as a default beam for downlink transmission, and determining a beam used for random access in the target cell as a default beam for uplink transmission.

In an embodiment, according to the method for cell handover of an embodiment of the present application, before receiving the cell handover signaling sent from the network device, the method further includes:
receiving configuration information of a transmission configuration indicator (TCI) state of a beam in the candidate cells sent from the network device; and
determining the default beam for the target cell includes:
   determining the default beam based on a sequence number of a TCI state for the target cell.

An embodiment of the present application further provides a method for cell handover, including:
receiving cell measurement results of preset cells, determining candidate cells from the preset cells based on the cell measurement results, and sending configuration information of the candidate cells to a user equipment (UE), where the configuration information is used for cell handover; and
sending a cell handover signaling to the UE, where the cell handover signaling is used to indicate a target cell for cell handover, where the target cell is one of the candidate cells;
   or,
receiving cell measurement results of candidate cells, and determining a target cell based on the cell measurement results; and
sending a cell handover signaling to the UE, where the cell handover signaling is used to indicate a target cell for cell handover, where the target cell is one of the candidate cells;
where the cell measurement results include an absolute value of at least one Layer 1 reference signal receiving power (L1-RSRP), and differential values of at least one L1-RSRP.

In an embodiment, according to a cell handover method of an embodiment of the present application, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, according to a cell handover method of an embodiment of the present application, the absolute value of the at least one L1-RSRP includes second absolute values of L L1-RSRPs, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, according to the method for cell handover of an embodiment of the present application, before sending the cell handover signaling to the UE, the method further includes:
sending configuration information of a transmission configuration indicator (TCI) state of a beam in the candidate cells to the UE.

In an embodiment, according to the method for cell handover of an embodiment of the present application, the cell handover signaling is a first signaling with a first field; the first signaling is used to indicate a target beam and the first field is used to indicate whether the first signaling carries information for cell handover; or
the cell handover signaling is a second signaling with a second field; the second signaling is used to indicate a target beam, the second field is used to indicate whether the second signaling carries information for cell handover, and the second field is further used to indicate the target cell; or
the cell handover signaling is a third signaling carrying a third field, where the third signaling is used to activate a target TCI state, and the third field is used to indicate whether the third signaling carries information for the cell handover.

In an embodiment, according to the method for cell handover of an embodiment of the present application, after sending the configuration information of the TCI state of the beam in the candidate cells to the UE, the method further includes:
sending a TCI state activation signaling to the UE to enable the UE to activate candidate TCI states indicated by the TCI state activation signaling;
where a number of candidate TCI states indicated by the TCI state activation signaling to be activated is less than or equal to a preset number threshold.

In an embodiment, according to a cell handover method of an embodiment of the present application, the cell handover signaling is a fourth signaling used for activating the target cell.

An embodiment of the present application provides a UE, including: a memory, a transceiver, and a processor, where
the memory is used for storing a computer program; the transceiver is used for receiving and sending data under control of the processor; and the processor is used for reading the computer program stored in the memory and performing steps of the method for cell handover described above.

An embodiment of the present application provides a network device, including a memory, a transceiver, and a processor, where
the memory is used for storing a computer program; the transceiver is used for receiving and sending data under control of the processor; and the processor is used for reading the computer program stored in the memory and performing steps of the method for cell handover described above.

An embodiment of the present application further provides a processor-readable storage medium, where the processor-readable storage medium stores a computer program and the computer program is used for causing the processor to perform the steps of the method for cell handover described above.

In the methods and apparatuses for cell handover, the UE, the network device and the storage medium provided by the embodiment of the present application, the network device determines the candidate cells through the cell measurement results and configures the candidate cells for the UE, and when performing cell handover, the UE may obtain the configuration information of the target cell from the configuration information of each candidate cell for cell handover, without the need to perform RRC configuration processing during the cell handover procedure, thereby shortening the cell handover time and ensuring the reliability of link transmission. Alternatively, by using the absolute value and differential values of L1-RSRPs in the cell measurement results, the number of bits required for the UE performing measurement report is reduced since the differential value is a smaller than the absolute value, which effectively reduces the air interface overhead of the UE for performing measurement report.

### BRIEF DESCRIPTION OF THE DRAWINGS

In order to more clearly illustrate solutions disclosed in the embodiments of the present application or the related art, the drawings used in the descriptions of the embodiments are briefly described below. The drawings in the following description are some embodiments of the present application, and other drawings may be obtained according to these drawings without any creative work for those skilled in the art.
FIG. 1 is a schematic diagram of handover interruption during cell handover in the related art;
FIG. 2 is a first schematic flowchart of a method for cell handover according to an embodiment of the present application;
FIG. 3 is a second schematic flowchart of a method for cell handover according to an embodiment of the present application;
FIG. 4 is a third schematic flowchart of a method for cell handover according to an embodiment of the present application;
FIG. 5 is a fourth schematic flowchart of a method for cell handover according to an embodiment of the present application;
FIG. 6 is a schematic structural diagram of a user equipment (UE) according to an embodiment of the present application;
FIG. 7 is a schematic structural diagram of a network device according to an embodiment of the present application;
FIG. 8 is a first schematic structural diagram of an apparatus for cell handover according to an embodiment of the present application; and
FIG. 9 is a second schematic structural diagram of an apparatus for cell handover according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

In the related art, a cell handover procedure may generally include the following steps.

Step 1: a user equipment (UE) performs measurements and reports measurement results based on configuration of a source next generation node B (source gNB).

Step 2: the source gNB determines a target cell to which the UE will perform handover based on the measurement results reported from the UE. If the target cell belongs to another gNB, the source gNB sends a handover request message to the target gNB. Here, the handover request message includes current configuration information of the UE, UE capabilities, and protocol data unit (PDU) session related information.

Step 3: Based on the handover request message sent from the source gNB, the target gNB performs admission control to determine whether the handover request may be accepted or rejected. That is, whether the target gNB may meet quality of service (QoS) requirements of a service.

Step 4: If the handover request is accepted, the target gNB responses to the source gNB with a handover request acknowledge message including a radio resource control (RRC) reconfiguration message. The reconfiguration message is configured to the UE by the source gNB. The handover request transmitted in step 2 and the handover request acknowledge message transmitted in step 4 are delivered over an Xn interface.

Step 5: the source gNB delivers the RRC reconfiguration to the UE as a handover command. The RRC reconfiguration includes information required for the UE to access the target gNB, including a target cell ID, a security configuration, and a cell radio network temporary identity (C-RNTI), etc.

Step 6: after receiving the RRC reconfiguration, the UE detaches from the current cell and synchronizes with a new cell.

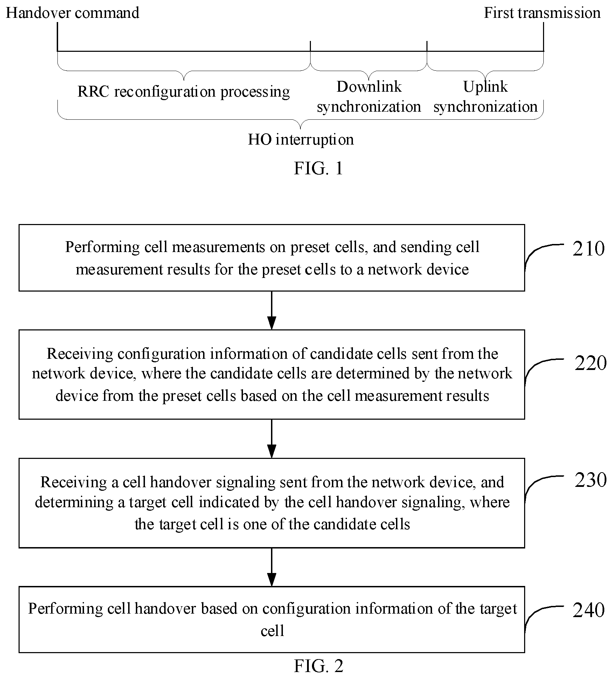

Based on the above procedure, it may be seen that in the related art, cell handover is performed based on layer 3. After receiving the RRC Reconfiguration message (handover command) sent from the base station, the UE performs handover to the new cell, and then the UE performs RRC reconfiguration processing, downlink synchronization, and uplink synchronization. FIG. 1 is a schematic diagram of handover interruption during cell handover in the related art. As shown in FIG. 1, a handover interruption with a large delay will occur in the handover procedure.

In view of the problem, the present application provides a method for cell handover. FIG. 2 is a first schematic flowchart of a method for cell handover according to an embodiment of the present application. As shown in FIG. 2, the method may be performed by a user equipment (UE), and the method includes:
step 210: performing cell measurements on preset cells, and sending cell measurement results for the preset cells to a network device.

The preset cells are cells that a network device configures to the UE and may be used as target cells during cell handover. A number of preset cells is usually multiple. The preset cells may include a currently accessed serving cell, and may also include other cells other than the serving cell. For example, adjacent cells of the serving cell can be used as preset cells.

The network device may notify the UE to perform cell measurement and reporting through a higher layer signaling. For example, the network device may notify the UE to perform cell measurements on each preset cell through RRC configuration CSI-ReportConfig. After completing the cell measurements for each preset cell, the UE may obtain cell measurement results. The cell measurement results here may be for each cell in the above-mentioned preset cells, or for a cell with a beam quality higher than the servicing cell in the above-mentioned preset cells, or for any part of the above-mentioned preset cells. The embodiment of the present application does not specifically limit this.

For example, the cell measurement results may include which specific cells among the measured preset cells have better beam quality than the serving cell. The cell measurement results may also include a specific period of time during which measurement results are obtained by performing L1 measurements. The cell measurement results may also include whether the measurement results of the above preset cells meet a predefined robustness of the L1 measurements.

After obtaining the cell measurement results, the UE may send the measurement results to the network device.

Step 220: receiving configuration information of candidate cells sent from the network device, where the candidate cells are determined by the network device from the preset cells based on the cell measurement results.

Specifically, after receiving the cell measurement results, the network device may select one or more preset cells from the above preset cells as a candidate cell through the cell measurement results. Here, the candidate cells are candidate target cells configured by the network device to the UE for subsequent cell handover. In an embodiment, the candidate target cell to which cell handover is performed must be one of the candidate cells.

Here, the cell measurement results sent from the UE to the network device may include Layer 1 reference signal receiving power (L1-RSRP) for each preset cell. Accordingly, the network device may sort the L1-RSRP for each preset cell among the cell measurement results to determine one or more preset cells with higher L1-RSRP as the candidate cells.

After selecting the candidate cells, the network device may add the candidate cells to the UE through higher layer configuration, and indicate configuration information of the candidate cells, such as a physical cell identifier (ID), frequency band information, an index, etc. Accordingly, the UE may receive the configuration information of the candidate cells sent from the network device, the UE knows which cells among the preset cells are selected as the candidate cells, and the configuration information used for RRC configuration when the candidate cells are used as the target cell.

Here, the configuration information of the candidate cells sent from the network device may be carried by an RRC signaling. For example, a newly designed RRC signaling RRCPhysicalCell may be applied. For another example, an RRC signaling modified on an original basis, such as ScellToAddModList in RRC Reconfiguration, may be applied for reconfiguring a secondary cell (Scell). To distinguish from the previous Scell having the same physical cell identifier (PCI), the reconfigured candidate cell here may correspond to a different PCI. In addition, in the configuration information of the candidate cells, cell indexes may be configured for different PCIs respectively.

Step 230: receiving a cell handover signaling sent from the network device, and determining a target cell indicated by the cell handover signaling, where the target cell is one of the candidate cells.

Specifically, the network device may determine whether the UE needs to perform cell handover, and in case of a determination that the UE performs cell handover, selects a target cell to which the UE performs cell handover from the previously determined candidate cells, generate and send cell handover signaling to enable the UE to perform the handover to the target cell after receiving the cell handover signaling. The cell handover signaling here may be an L1/L2 signaling, for example, media access control-control element (MAC-CE), or downlink control information (DCI). In an embodiment, sending of L1/L2 signaling is more flexible compared with sending of L3 RRC reconfiguration, which also helps to improve the flexibility of cell handover.

Accordingly, the UE may receive the cell handover signaling sent from the network device, and determine the target cell based on the cell handover signaling. Here, the UE may determine the target cell based on an identifier of the target cell carried in the cell handover signaling, or determine a target beam based on an identifier of the target beam carried in the cell handover signaling, and then determine a target cell to which the target beam belongs based on a pre-acquired relationship between a beam and a cell. The embodiment of the present application does not specifically limit this.

Step 240: performing cell handover based on configuration information of the target cell.

Specifically, since the target cell is one of the candidate cells, the configuration information of each candidate cell has been configured to the UE by the network device before the UE receives the cell handover signaling. Therefore, after determining the target cell, the UE knows the configuration information of the target cell, and only needs to perform uplink and downlink synchronization after performing handover from a serving cell to the target cell, without the need to perform RRC configuration processing for the target cell. That is, before the cell handover, the UE has completed the RRC configuration processing for the target cell, that is, to obtain the configuration information of the target cell. Therefore, during the cell handover procedure, the UE may save time originally required for the RRC configuration processing, thereby shortening a duration of the handover interruption.

In the method provided by the embodiment of the present application, the network device determines the candidate cells through the cell measurement results and configures the candidate cells for the UE, and when performing cell handover, the UE may obtain the configuration information of the target cell from the configuration information of each candidate cell for cell handover, without the need to perform RRC configuration processing during the cell handover procedure, thereby shortening the cell handover time and ensuring the reliability of link transmission.

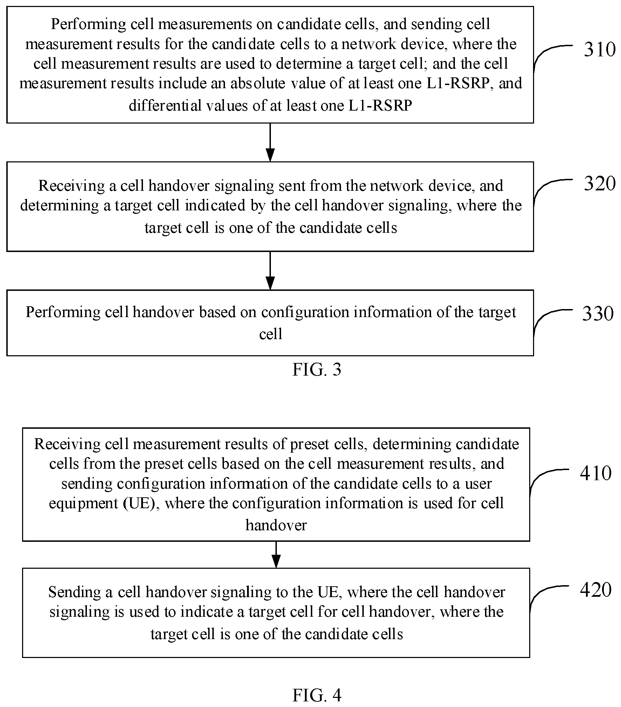

Based on the above embodiment, FIG. 3 is a second schematic flowchart of a method for cell handover according to an embodiment of the present application. As shown in FIG. 3, the method may be performed by a user equipment (UE), and the method includes:
step 310: performing cell measurements on candidate cells, and sending cell measurement results for the candidate cells to a network device, where the cell measurement results are used to determine a target cell; and the cell measurement results include an absolute value of at least one Layer 1 reference signal receiving power (L1-RSRP), and differential values of at least one L1-RSRP.

The candidate cells are cells that a network device configures to the UE and may be used as target cells during cell handover. A number of the candidate cells is usually multiple. The candidate cells may include a currently accessed serving cell, and may also include other cells other than the serving cell. For example, adjacent cells of the serving cell can be used as candidate cells.

The network device may notify the UE to perform cell measurement and reporting through a higher layer signaling. For example, the network device may notify the UE to perform cell measurements on each candidate cell through RRC configuration CSI-ReportConfig. After completing the cell measurements for each candidate cell, the UE may obtain cell measurement results. The cell measurement results here may be for each cell in the above-mentioned candidate cells, or for a cell with a beam quality higher than the servicing cell in the above-mentioned candidate cells, or for any part of the above-mentioned candidate cells. The embodiment of the present application does not specifically limit this.

Further, the cell measurement results here may include values obtained by performing L1-RSRP measurement on one or more candidate cells. In an embodiment, L1-RSRP measurement is performed on each candidate cell here to obtain at least one L1-RSRP for each candidate cell. On this basis, in order to save the air interface overhead for the UE measurement reporting, a part of at least one L1-RSRP for each candidate cell may be differentiated and transmitted in the form of a differential value. In an embodiment, the differential value obtained by the differentiation is smaller than an original absolute value, a number of quantized bits is smaller, which may save the air interface overhead for the UE measurement reporting. That is, the cell measurement results may include the absolute value of at least one L1-RSRP, and differential values of at least one L1-RSRP.

The absolute value of L1-RSRP is a value obtained by performing L1-RSRP measurement. The differential values of L1-RSRP may be obtained by differentiating absolute values of two L1-RSRPs. For example, a ratio of the absolute value of the second L1-RSRP to the absolute value of the first L1-RSRP for the candidate cell may be used as the differential value of the second L1-RSRP. The cell measurement results may include the absolute value of the first L1-RSRP and the differential value of the second L1-RSRP for the candidate cell. Accordingly, after receiving the cell measurement results, the network device may obtain the absolute value of the first L1-RSRP and the differential value of the second L1-RSRP for the candidate cell, and calculate an absolute value of the second L1-RSRP by using the absolute value of the first L1-RSRP and the differential value of the second L1-RSRP.

After obtaining the cell measurement results, the UE may send the cell measurement results to the network device, and the network device may determine the target cell for cell handover from the candidate cells based on the cell measurement results.

Step 320: receiving a cell handover signaling sent from the network device, and determining a target cell indicated by the cell handover signaling, where the target cell is one of the candidate cells.

Specifically, the network device may determine whether the UE needs to perform cell handover, and in case of a determination that the UE performs cell handover, selects a target cell to which the UE performs cell handover from the previously determined candidate cells, generate and send cell handover signaling to enable the UE to perform the handover to the target cell after receiving the cell handover signaling. The cell handover signaling here may be a L1/L2 signaling, for example, media access control-control element (MAC-CE), or downlink control information (DCI). In an embodiment, sending of L1/L2 signaling is more flexible compared with sending of L3 RRC reconfiguration, which also helps to improve the flexibility of cell handover.

Accordingly, the UE may receive the cell handover signaling sent from the network device, and determine the target cell based on the cell handover signaling. Here, the UE may determine the target cell based on an identifier of the target cell carried in the cell handover signaling, or determine a target beam based on an identifier of the target beam carried in the cell handover signaling, and then determine a target cell to which the target beam belongs based on a pre-acquired relationship between a beam and a cell. The embodiment of the present application does not specifically limit this.

Step 330: performing cell handover based on configuration information of the target cell.

Specifically, since the target cell is one of the candidate cells, the configuration information of each candidate cell has been configured to the UE by the network device before the UE receives the cell handover signaling. Therefore, after determining the target cell, the UE knows the configuration information of the target cell, and only needs to perform uplink and downlink synchronization after performing handover from a serving cell to the target cell, without the need to perform RRC configuration processing for the target cell. That is, before the cell handover, the UE has completed the RRC configuration processing for the target cell, that is, to obtain the configuration information of the target cell. Therefore, during the cell handover procedure, the UE may save time originally required for the RRC configuration processing, thereby shortening a duration of the handover interruption.

In the method provided by the embodiment of the present application, by using the absolute value and differential values of L1-RSRPs in the cell measurement results, the number of bits required for the UE performing measurement report is reduced since the differential value is a smaller than the absolute value, which effectively reduces the air interface overhead of the UE for performing measurement report.

Based on any of the above embodiments, in the cell measurement results, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, M is a number of L1-RSRPs obtained through measurement on one candidate cell, and L-1, M-1, and (M-1)*L are numbers;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

Specifically, after the L1-RSRPs for the L candidate cells are obtained, the maximum value among the L1-RSRPs may be determined therefrom, and an absolute value of the first L1-RSRP for the candidate cell where the maximum value is located is used as the only absolute value of the L1-RSRP in the cell measurement results, that is, the first absolute value.

On this basis, the first difference values of the L-1 L1-RSRPs may be determined. The first differential values of the L-1 L1-RSRP here correspond to the L-1 candidate cells other than a candidate cell where the first absolute value is located among the L candidate cells, which are referred to as L-1 first candidate cells here. Moreover, the first differential values are specifically differential values of the first L1-RSRP for each of the L-1 first candidate cells with respect to the above-mentioned first absolute value.

In addition, the second differential values of (M-1)*L L1-RSRPs may also be determined. The second differential values of (M-1)*L L1-RSRPs here correspond to the L candidate cells, and specifically correspond to the differential values of M-1 L1-RSRPs in each candidate cell, that is, differential values of the absolute value of the remaining M-1 L1-RSRPs other than the first L1-RSRP with respect to the absolute value of the first L1-RSRP in each candidate cell.

For example, the base station indicates the UE to measure and report the L1-RSRP/L1-SINR of three candidate cells, candidate cell 1, candidate cell 2, and candidate cell 3. The UE measures the L1-RSRP/L1-SINR for candidate cell 1 and obtains the following measurement results:
Candidate cell 1 {15; 14.8; 14.6; 14.3};
Candidate cell 2 {7; 6.8; 6.4; 6.3};
Candidate cell 3 {2; 1.5; 1.7; 1.3}.

In case of reporting the cell measurement results, the UE first determines the maximum measurement value in each candidate cell, then differentiates based on the maximum measurement value, and differentiates the measurement values of each candidate cell in case of reporting the measurement values of each candidate cell. The finally reported cell measurement results are:
Candidate cell 1{15,14.8/15,14.6/15; 14.3/15};
Candidate cell 2{7/15,6.8/7,6.4/7,6.3/7};
Candidate cell 3 {2/15,1.5/2,1.7/2,1.3/2}.

In an embodiment, 15 is the maximum value of L1-RSRPs, and the candidate cell where 15 is located is Candidate cell 1, that is, the cell measurement results include the first absolute value 15. On this basis, the cell measurement results also include the first differential values of Candidate cells 2 and 3, namely 7/15 and 2/15. In addition, the cell measurement results also include second differential values of each candidate cell, namely, differential values {14.8/15, 14.6/15; 14.3/15} with respect to the absolute value 15 of the first L1-RSRP for Candidate cell 1, differential values {6.8/7, 6.4/7, 6.3/7} with respect to the absolute value 7 of the first L1-RSRP for Candidate cell 2, and differential values {1.5/2, 1.7/2, 1.3/2} with respect to the absolute value 2 of the first L1-RSRP for Candidate cell 3.

Based on any of the above embodiments, in the cell measurement results, the absolute value of the at least one L1-RSRP includes second absolute values of L L1-RSRPs, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

Specifically, after the L1-RSRPs for the L candidate cells are obtained, an absolute value of the first L1-RSRP among the M L1-RSRPs for each candidate cell may be used as the second absolute value for each candidate cell, and the cell measurement results include L second absolute values.

In addition, the second differential values of (M-1)*L L1-RSRPs may also be determined. The second differential values of (M-1)*L L1-RSRPs here correspond to the L candidate cells, and specifically correspond to the differential values of M-1 L1-RSRPs in each candidate cell, that is, differential values of the absolute value of the remaining M-1 L1-RSRPs other than the first L1-RSRP with respect to the absolute value of the first L1-RSRP in each candidate cell.

For example, the base station indicates the UE to measure and report the L1-RSRP/L1-SINR of three candidate cells, candidate cell 1, candidate cell 2, and candidate cell 3. The UE measures the L1-RSRP/L1-SINR for candidate cell 1 and obtains the following measurement results:
Candidate cell 1 {15; 14.8; 14.6; 14.3};
Candidate cell 2 {7; 6.8; 6.4; 6.3};
Candidate cell 3 {2; 1.5; 1.7; 1.3}.

In case that the UE reports the cell measurement results, the measurement values of each candidate cell are differentiated, and the finally reported cell measurement results are:
Candidate cell 1{15,14.8/15,14.6/15; 14.3/15};
Candidate cell 2{7,6.8/7,6.4/7,6; 3/7};
Candidate cell 3{2,1.5/2,1.7/2,1.3/2}.

In an embodiment, the cell measurement result includes the second absolute values 15, 7, and 2 corresponding to the three candidate cells. On this basis, the cell measurement results also include second differential values of three candidate cells, namely, differential values {14.8/15, 14.6/15; 14.3/15} with respect to the absolute value 15 of the first L1-RSRP for Candidate cell 1, differential values {6.8/7, 6.4/7, 6.3/7} with respect to the absolute value 7 of the first L1-RSRP for Candidate cell 2, and differential values {1.5/2, 1.7/2, 1.3/2} with respect to the absolute value 2 of the first L1-RSRP for Candidate cell 3.

In the above cell handover scenario, there are generally two ways, one way is that the cell handover and beam switching occur at the same time, and the other way is to perform the cell handover first and then perform the beam switching. For the first way, that is, the case where the cell handover and the beam switching occur at the same time, how to achieve the cell handover and the beam switching simultaneously is still an urgent problem to be solved. In order to solve this problem, the present application provides the following embodiments.

Before step 230 or step 320, the method further includes:
receiving configuration information of a transmission configuration indicator (TCI) state of a beam in the candidate cells sent from the network device.

Specifically, after determining the candidate cells, the network device may not only send the configuration information of the candidate cells to the UE, but also send the configuration information of the TCI state of the beam in the candidate cell to the UE.

Accordingly, in step 230 or step 320, determining the target cell indicated by the cell handover signaling includes:
determining the target cell indicated by the cell handover signaling and a target beam, where the target beam is a beam of which the TCI state is an activated state in the target cell.

Specifically, the cell handover signaling may indicate the target cell and/or target beam to which the cell handover is performed while indicating to perform the cell handover. Thus, after receiving the cell handover signaling, the UE may determine the target cell and target beam indicated by the cell handover signaling. For example, the UE may determine the target cell based on the cell handover signaling, and selects a beam of which the TCI state is an activated state from various beams in the target cell as the target beam; or determine the target beam based on the cell handover signaling, and then determines the candidate cell to which the target beam belongs as the target cell. The embodiment of the present application does not specifically limit this.

In an embodiment, after completing the configuration of the TCI state of the beam in each candidate cell, the network device may also activate/deactivate the TCI state of the beam in each candidate cell. In order to facilitate the simultaneous cell handover and beam switching, the target beam is limited to the beam of which the TCI state is an activated state in the target cell, that is, the target beam itself is the beam of the target cell, and the TCI state of the target beam is the activated state.

Accordingly, in step 240 or step 330, performing the cell handover based on configuration information of the target cell includes:
performing the cell handover based on the configuration information of the target cell and performing beam switching based on configuration information of a TCI state of the target beam.

Specifically, since the target cell as well as the target beam is determined by the cell handover signaling, the cell handover may be performed based on the configuration information of the target cell, and the beam switching may be performed based on the configuration information of the TCI state of the target beam, which realizes the simultaneous execution of cell handover and beam switching.

Moreover, after completing the above-mentioned cell handover and beam switching, the UE may perform hybrid automatic repeat request/acknowledgement (HARQ/ACK) feedback on the cell handover signaling and use the target beam to communicate with the target cell.

By the method provided by the embodiment of the present application, cell handover and beam switching are simultaneously performed to reduce the delay caused by the handover.

Based on any of the above-mentioned embodiments, in order to simultaneously perform the cell handover and the beam switching, the cell handover signaling is a first signaling with a first field; and
in step 230 or step 320, determining the target cell indicated by the cell handover signaling and the target beam includes:
determining a target beam indicated by the first signaling in case that the first field indicates that the first signaling carries information for cell handover; and
determining a cell to which the target beam belongs as the target cell based on the configuration information of the candidate cell.

Specifically, the first signaling may be DCI, and the first signaling itself has a function of indicating the beam. A first field may be set in the first signaling to indicate whether the first signaling carries information for cell handover. The first field here may be added on the basis of the original first signaling, or may be one field in the original first signaling, and for a first field currently in use, a special value may be used to indicate whether the first signaling carries information for cell handover.

In an embodiment, in case that the first field set in the first signaling indicates that the first signaling carries information for cell handover, the beam indicated by the first signaling itself is the target beam for cell handover.

For example, the first signaling may be a DCI indicated by a beam, specifically DCI format 1_1/1_2, and a field may be newly added in the DCI as the first field. A length of the first field is 1 bit, which is used to indicate whether the first signaling is a DCI carrying information for cell handover or a DCI that only indicates a beam.

In case of receiving the first signaling indicating only the target beam, the UE may determine the candidate cell to which the target beam belongs, that is, the target cell, based on beams of each candidate cell indicated by the configuration information of the candidate cells.

In the method provided by the embodiment of the present application, the target cell and the target beam are indicated to the UE by the first signaling carrying the first field, which provide conditions for simultaneously performing the cell handover and the beam switching, and further shortens the time consumption of the cell handover.

Based on any of the above-mentioned embodiments, in order to simultaneously perform the cell handover and the beam switching, the cell handover signaling is a second signaling with a second field; and
in step 230 or step 320, determining the target cell indicated by the cell handover signaling and the target beam includes:
determining a target beam indicated by the second signaling and a target cell indicated by the second field in case that the second field indicates that the second signaling carries information for cell handover.

Specifically, the second signaling may be DCI, and the second signaling itself has a function of indicating the beam. A second field may be set in the second signaling to indicate whether the second signaling carries information for the cell handover and indicates the target cell for the cell handover. The second field here may be added on the basis of the original second signaling, or may be two fields in the original second signaling, and for a second field currently in use, a special value may be used to indicate whether the second signaling carries information for cell handover.

In an embodiment, in case that the second field set in the first signaling indicates that the second signaling carries information for cell handover, the beam indicated by the second signaling itself is the target beam for cell handover and a cell indicated by the second field in the second signaling is the target cell for cell handover.

For example, the second signaling may be a DCI indicating a beam, specifically a DCI format 1_1/1_2, and one field may be newly added in the DCI as the second field. The second field may be specifically divided into two parts, one of which may be denoted as handover_indicator to indicate whether the second signaling carries information for cell handover, and the other may be denoted as PCI _indicator to indicate the target cell for cell handover. For another example, special values of certain fields in DCI format 1_1/1_2 may be used to indicate that the DCI carries information for cell handover, and at the same time indicate a physical cell identifier (PCI) or PCI indicator of the target cell in the DCI.

In case of receiving the second signaling, the UE may determine the target beam indicated by the second signaling and the target cell indicated by the second field carried in the second signaling.

In the method provided by the embodiment of the present application, the target cell and the target beam are indicated to the UE by the second signaling carrying the second field, which provides conditions for simultaneously performing the cell handover and the beam switching, and further shortens the time consumption of the cell handover.

Based on any of the above-mentioned embodiments, in order to simultaneously perform the cell handover and the beam switching, the cell handover signaling is a third signaling with a third field; and
in step 230 or step 320, determining the target cell indicated by the cell handover signaling and the target beam includes:
in case that the third field indicates that the third signaling carries information for cell handover, activating a target TCI state based on the third signaling, and determining the target cell and the target beam based on the target TCI state.

Specifically, the third signaling may be an MAC-CE, and the third signaling itself has a function of activating the TCI state. The third field may be set in the third signaling to indicate whether the third signaling carries information for the cell handover. The third field here may be added on the basis of the original third signaling.

In an embodiment, in case that the third field set in the third signaling indicates that the third signaling carries information for cell handover, the TCI state activated by the third signaling itself is the TCI state corresponding to the target beam in the target cell for cell handover.

In case of receiving the third signaling, the UE may determine the target TCI state activate by the third signaling, and then determine the beam corresponding to the target TCI state as the target beam based on the configuration information of the TCI state of each beam in the candidate cell, and determine the cell to which the beam belongs as the target cell.

In the method provided by the embodiment of the present application, the target cell and the target beam are indicated to the UE by the third signaling carrying the third field, which provides conditions for simultaneously performing the cell handover and the beam switching, and further shortens the time consumption of the cell handover.

In the case where the cell handover and the beam switching occur at the same time, there is another problem, that is, the beam switching occurs frequently, which leads to unnecessary cell handover. In view of this problem, the present application provides the following solution based on the above embodiments.

Based on any of the above embodiments, in order to perform simultaneously cell handover and beam switching, it is necessary to activate candidate TCI states of candidate beams that may be the target beam before the cell handover. Therefore, after receiving configuration information of a transmission configuration indicator (TCI) state of a beam in the candidate cells sent from the network device, the method further includes:
receiving a TCI state activation signaling sent from the network device; and
activating candidate TCI states indicated by the TCI state activation signaling;
where a number of candidate TCI states indicated by the TCI state activation signaling to be activated is less than or equal to a preset number threshold.

Specifically, the network device may determine the candidate TCI states that need to be activated based on the cell measurement results reported by the UE, and then generate the TCI state activation signaling and send the TCI state activation signaling to the UE. The TCI state activation signaling here may be an MAC-CE.

After receiving the TCI state activation signaling, the UE may determine candidate TCI states that need to be activated indicated by the TCI state activation signaling and activate the candidate TCI state.

In order to solve the problem of unnecessary cell handover caused by frequent beam switching, the embodiment of the present application limits the TCI state activation signaling, that is, a number of candidate TCI states activated by the TCI state activation signaling is less than or equal to the preset number threshold. By setting the preset number threshold and limiting the maximum number of TCI states that may be activated, the total number of switchable beams is limited, thereby avoiding the frequent beam switching.

For example, the preset number threshold M may be set to 8, then the TCI state activation signaling may activate up to 8 TCI states, of which at most 1 TCI state belongs to an adjacent cell. The M TCI states here may be configured in the current serving cell or in the candidate cell.

In addition, in an embodiment, if the candidate TCI states that need to be activated belongs to the current serving cell, the network device may activate the TCI state through the traditional MAC-CE way. If the candidate TCI states that need to be activated belongs to the candidate cells, the network device needs to activate the TCI states of the candidate cells through a new MAC-CE, and the new MAC-CE here carries the PCIs of the candidate cells.

In the method provided by the embodiment of the present application, by limiting the number of candidate TCI states used for activation indicated by the TCI state activation signaling, the total number of switchable beams is limited to avoid the occurrence of frequent beam switching.

Based on any of the above embodiments, for the second way, that is, performing the cell handover first and then the beam switching, the cell handover may be performed in the following manner: the cell handover signaling is a fourth signaling.

Accordingly, in step 230 or step 320, determining the target cell indicated by the cell handover signaling includes:
determining a cell indicated by the fourth signaling to be activated as the target cell.

Specifically, the fourth signaling may be an MAC-CE. The fourth signaling itself has a function of activating the cell. After receiving the fourth signaling, the UE may determine a cell activated by the fourth signaling as the target cell.

In the method provided by the embodiment of the present application, the target cell indicated to the UE by the fourth signaling, which provides conditions for realizing the way of performing the cell handover first and then the beam switching.

Based on any of the above embodiments, in the procedure of performing the cell handover first and then the beam switching, after the UE receives the indication of the network device and performs handover to the target cell and before indication of the first beam, what beam the UE uses for uplink and downlink transmission is a problem that needs to be solved. In view of this problem, in the embodiment of the present application, after step 240 or step 330, the method further includes:
before receiving a beam switching signaling sent from the network device, determining a default beam for the target cell, and performing information transmission based on the default beam.

Specifically, in case of performing handover to the target cell, but not receiving the beam switching signaling, that is, not knowing the target beam indicated by the network device, a predefined default beam may be used for information transmission. It may be a default beam, or it may be a pre-specified beam in various beams of the target cell. For example, the default beam may be a synchronization signal block (SSB) beam for initial access, or may be a beam of a target cell for random access, or may be a beam with the lowest or highest sequence number of the TCI state corresponding to each beam of the target cell. The embodiment of the present application does not specifically limit this.

In the method provided by the embodiment of the present application, the default beam is used for information transmission during a period at which the UE performs handover to the target cell but the new beam is not yet valid, which avoids the problem of a decrease in uplink and downlink transmission performance since the UE does not know which beam to use for uplink and downlink transmission.

Based on any of the above embodiments, determining the default beam for the target cell includes:
determining a beam used for transmitting a synchronization signal block (SSB) in the target cell as a default beam for downlink transmission, and determining a beam used for random access in the target cell as a default beam for uplink transmission.

Specifically, during the period at which the UE performs handover to the target cell but the new beam is not yet valid, default beams for uplink and downlink transmission may be used respectively. Further, for downlink transmission, a beam first used for SSB transmission during the period at which the UE performs handover to the target cell but the new beam is not yet valid may be used as the default beam for downlink transmission. For uplink transmission, a beam used for random access during the period at which the UE performs handover to the target cell but the new beam is not yet valid may be used as the default beam for uplink transmission.

The above-mentioned default beams may be used for information transmission before the new beam is valid. That is, if the UE receives the beam switching signaling sent from the network device, the UE needs to determine a new beam from the beam switching signaling, and apply the new beam for information transmission after the new beam is valid.

The method provided in the embodiment of the present application provides a selection way of the default beam, and provides the implementation conditions for using the default beam for information transmission during the period at which the UE performs handover to the target cell but the new beam is not yet valid.

Based on any one embodiment above, before receiving the cell handover signaling sent from the network device, the method further includes:
receiving configuration information of a transmission configuration indicator (TCI) state of a beam in the candidate cells sent from the network device; and
determining the default beam for the target cell includes:
   determining the default beam based on a sequence number of a TCI state for the target cell.

Specifically, in the case of performing the cell handover first and then the beam switching, the network device may also send the configuration information of the TCI state of the beam in the candidate cell to the UE. Accordingly, in case of determining the default beam, the network device may also select the default beam based on the sequence number of each TCI state in the configuration information of the TCI state of the beam in the target cell. Here, the sequence number of the TCI state may be a TCI state identifier (ID), and specifically, the beam corresponding to the TCI state with the lowest ID may be selected as the default beam, or the beam corresponding to the TCI state with the highest ID may be selected as the default beam, and the embodiments of the present application do not specifically limit this.

The method provided in the embodiment of the present application provides a selection way of the default beam, and provides the implementation conditions for using the default beam for information transmission during the period at which the UE performs handover to the target cell but the new beam is not yet valid.

Based on any of the above embodiments, FIG. 4 is a third schematic flowchart of a method for cell handover according to an embodiment of the present application. As shown in FIG. 4, the method may be performed by a network device, and the method includes:
step 410: receiving cell measurement results of preset cells, determining candidate cells from the preset cells based on the cell measurement results, and sending configuration information of the candidate cells to a user equipment (UE), where the configuration information is used for cell handover.

The preset cells are cells that a network device configures to the UE and may be used as target cells during cell handover. A number of preset cells is usually multiple. The preset cells may include a currently accessed serving cell, and may also include other cells other than the serving cell. For example, adjacent cells of the serving cell can be used as preset cells.

The network device may notify the UE to perform cell measurement and reporting through a higher layer signaling. For example, the network device may notify the UE to perform cell measurements on each preset cell through RRC configuration CSI-ReportConfig. After completing the cell measurements for each preset cell, the UE may obtain cell measurement results. The cell measurement results here may be for each cell in the above-mentioned preset cells, or for a cell with a beam quality higher than the servicing cell in the above-mentioned preset cells, or for any part of the above-mentioned preset cells. The embodiment of the present application does not specifically limit this.

After obtaining the cell measurement results, the UE may send the cell measurement results to the network device. After receiving the cell measurement results, the network device may select one or more preset cells from the above preset cells as candidate cells through the cell measurement results. Here, the candidate cells are candidate target cells configured by the network device to the UE for subsequent cell handover. In an embodiment, the candidate target cell to which cell handover is performed must be one of the candidate cells.

Here, the cell measurement results sent from the UE to the network device may include Layer 1 reference signal receiving power (L1-RSRP) for each preset cell. Accordingly, the network device may sort the L1-RSRP for each preset cell among the cell measurement results to determine one or more preset cells with higher L1-RSRP as the candidate cells.

After selecting the candidate cells, the network device may add the candidate cells to the UE through higher layer configuration, and indicate configuration information of the candidate cells, such as a physical cell identifier (ID), frequency band information, an index, etc. Accordingly, the UE may receive the configuration information of the candidate cells sent from the network device, the UE knows which cells among the preset cells are selected as the candidate cells, and the configuration information used for RRC configuration when the candidate cells are used as the target cell.

Step 420: sending a cell handover signaling to the UE, where the cell handover signaling is used to indicate a target cell for cell handover, where the target cell is one of the candidate cells.

Specifically, the network device may determine whether the UE needs to perform cell handover, and in case of a determination that the UE performs cell handover, selects a target cell to which the UE performs cell handover from the previously determined candidate cells, generate and send cell handover signaling to enable the UE to perform the handover to the target cell after receiving the cell handover signaling. The cell handover signaling here may be a L1/L2 signaling, for example, media access control-control element (MAC-CE), or downlink control information (DCI). In an embodiment, sending of L1/L2 signaling is more flexible compared with sending of L3 RRC reconfiguration, which also helps to improve the flexibility of cell handover.

Accordingly, the UE may receive the cell handover signaling sent from the network device, and determine the target cell based on the cell handover signaling. Here, the UE may determine the target cell based on an identifier of the target cell carried in the cell handover signaling, or determine a target beam based on an identifier of the target beam carried in the cell handover signaling, and then determine a target cell to which the target beam belongs based on a pre-acquired relationship between a beam and a cell. The embodiment of the present application does not specifically limit this.

Since the target cell is one of the candidate cells, the configuration information of each candidate cell has been configured to the UE by the network device before the UE receives the cell handover signaling. Therefore, after determining the target cell, the UE knows the configuration information of the target cell, and only needs to perform uplink and downlink synchronization after performing handover from a serving cell to the target cell, without the need to perform RRC configuration processing for the target cell. That is, before the cell handover, the UE has completed the RRC configuration processing for the target cell, that is, to obtain the configuration information of the target cell. Therefore, during the cell handover procedure, the UE may save time originally required for the RRC configuration processing, thereby shortening a duration of the handover interruption.

In the method provided by the embodiment of the present application, the network device determines the candidate cells through the cell measurement results and configures the candidate cells for the UE, and when performing cell handover, the UE may obtain the configuration information of the target cell from the configuration information of each candidate cell for cell handover, without the need to perform RRC configuration processing during the cell handover procedure, thereby shortening the cell handover time and ensuring the reliability of link transmission.

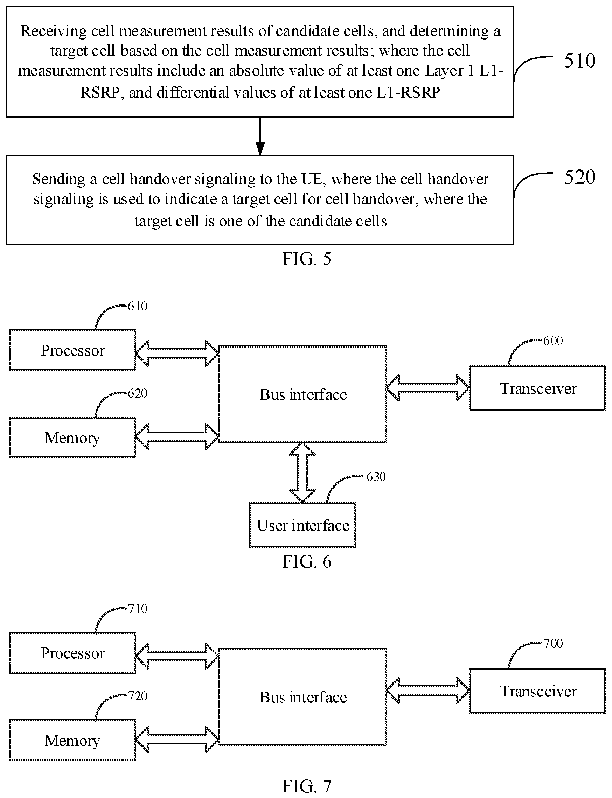

Based on any of the above embodiments, FIG. 5 is a fourth schematic flowchart of a method for cell handover according to an embodiment of the present application. As shown in FIG. 5, the method may be performed by a network device, and the method includes:
step 510: receiving cell measurement results of candidate cells, and determining a target cell based on the cell measurement results; where the cell measurement results include an absolute value of at least one Layer 1 reference signal receiving power (L1-RSRP), and differential values of at least one L1-RSRP.

The candidate cells are cells that a network device configures to the UE and may be used as target cells during cell handover. A number of the candidate cells is usually multiple. The candidate cells may include a currently accessed serving cell, and may also include other cells other than the serving cell. For example, adjacent cells of the serving cell can be used as candidate cells.

The network device may notify the UE to perform cell measurement and reporting through a higher layer signaling. For example, the network device may notify the UE to perform cell measurements on each candidate cell through RRC configuration CSI-ReportConfig. After completing the cell measurements for each candidate cell, the UE may obtain cell measurement results. The cell measurement results here may be for each cell in the above-mentioned candidate cells, or for a cell with a beam quality higher than the servicing cell in the above-mentioned candidate cells, or for any part of the above-mentioned candidate cells. The embodiment of the present application does not specifically limit this.

After obtaining the cell measurement results, the UE may send the cell measurement results to the network device, and after receiving the cell measurement results, the network device may determine the target cell for cell handover from the candidate cells based on the cell measurement results.

Further, the cell measurement results here may include values obtained by performing L1-RSRP measurement on one or more candidate cells. In an embodiment, L1-RSRP measurement is performed on each candidate cell here to obtain at least one L1-RSRP for each candidate cell. On this basis, in order to save the air interface overhead for the UE measurement reporting, a part of at least one L1-RSRP for each candidate cell may be differentiated and transmitted in the form of a differential value. In an embodiment, the differential value obtained by the differentiation is smaller than an original absolute value, a number of quantized bits is smaller, which may save the air interface overhead for the UE measurement reporting. That is, the cell measurement results may include the absolute value of at least one L1-RSRP, and differential values of at least one L1-RSRP.

The absolute value of L1-RSRP is a value obtained by performing L1-RSRP measurement. The differential values of L1-RSRP may be obtained by differentiating absolute values of two L1-RSRPs. For example, a ratio of the absolute value of the second L1-RSRP to the absolute value of the first L1-RSRP for the candidate cell may be used as the differential value of the second L1-RSRP. The cell measurement results may include the absolute value of the first L1-RSRP and the differential value of the second L1-RSRP for the candidate cell. Accordingly, after receiving the cell measurement results, the network device may obtain the absolute value of the first L1-RSRP and the differential value of the second L1-RSRP for the candidate cell, and calculate an absolute value of the second L1-RSRP by using the absolute value of the first L1-RSRP and the differential value of the second L1-RSRP.

Step 520: sending a cell handover signaling to the UE, where the cell handover signaling is used to indicate a target cell for cell handover, where the target cell is one of the candidate cells.

Specifically, the network device may determine whether the UE needs to perform cell handover, and in case of a determination that the UE performs cell handover, selects a target cell to which the UE performs cell handover from the previously determined candidate cells, generate and send cell handover signaling to enable the UE to perform the handover to the target cell after receiving the cell handover signaling. The cell handover signaling here may be a L1/L2 signaling, for example, media access control-control element (MAC-CE), or downlink control information (DCI). In an embodiment, sending of L1/L2 signaling is more flexible compared with sending of L3 RRC reconfiguration, which also helps to improve the flexibility of cell handover.

Accordingly, the UE may receive the cell handover signaling sent from the network device, and determine the target cell based on the cell handover signaling. Here, the UE may determine the target cell based on an identifier of the target cell carried in the cell handover signaling, or determine a target beam based on an identifier of the target beam carried in the cell handover signaling, and then determine a target cell to which the target beam belongs based on a pre-acquired relationship between a beam and a cell. The embodiment of the present application does not specifically limit this.

Since the target cell is one of the candidate cells, the configuration information of each candidate cell has been configured to the UE by the network device before the UE receives the cell handover signaling. Therefore, after determining the target cell, the UE knows the configuration information of the target cell, and only needs to perform uplink and downlink synchronization after performing handover from a serving cell to the target cell, without the need to perform RRC configuration processing for the target cell. That is, before the cell handover, the UE has completed the RRC configuration processing for the target cell, that is, to obtain the configuration information of the target cell. Therefore, during the cell handover procedure, the UE may save time originally required for the RRC configuration processing, thereby shortening a duration of the handover interruption.

In the method provided by the embodiment of the present application, by using the absolute value and differential values of L1-RSRPs in the cell measurement results, the number of bits required for the UE performing measurement report is reduced since the differential value is a smaller than the absolute value, which effectively reduces the air interface overhead of the UE for performing measurement report.

Based on any of the above embodiments, in the cell measurement results, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

Specifically, after the L1-RSRPs for the L candidate cells are obtained, the maximum value among the L1-RSRPs may be determined therefrom, and an absolute value of the first L1-RSRP for the candidate cell where the maximum value is located is used as the only absolute value of the L1-RSRP in the cell measurement results, that is, the first absolute value.

On this basis, the first difference values of the L-1 L1-RSRPs may be determined. The first differential values of the L-1 L1-RSRP here correspond to the L-1 candidate cells other than a candidate cell where the first absolute value is located among the L candidate cells, which are referred to as L-1 first candidate cells here. Moreover, the first differential values are specifically differential values of the first L1-RSRP for each of the L-1 first candidate cells with respect to the above-mentioned first absolute value.

In addition, the second differential values of (M-1)*L L1-RSRPs may also be determined. The second differential values of (M-1)*L L1-RSRPs here correspond to the L candidate cells, and specifically correspond to the differential values of M-1 L1-RSRPs in each candidate cell, that is, differential values of the absolute value of the remaining M-1 L1-RSRPs other than the first L1-RSRP with respect to the absolute value of the first L1-RSRP in each candidate cell.

For example, the base station indicates the UE to measure and report the L1-RSRP/L1-SINR of three candidate cells, candidate cell 1, candidate cell 2, and candidate cell 3. The UE measures the L1-RSRP/L1-SINR for candidate cell 1 and obtains the following measurement results:
Candidate cell 1 {15; 14.8; 14.6; 14.3};
Candidate cell 2{7; 6.8; 6.4; 6.3};
Candidate cell 3{2; 1.5; 1.7; 1.3}.

In case of reporting the cell measurement results, the UE first determines the maximum measurement value in each candidate cell, then differentiates based on the maximum measurement value, and differentiates the measurement values of each candidate cell in case of reporting the measurement values of each candidate cell. The finally reported cell measurement results are:
Candidate cell 1{15,14.8/15,14.6/15; 14.3/15};
Candidate cell 2{7/15,6.8/7,6.4/7,6.3/7};
Candidate cell 3 {2/15,1.5/2,1.7/2,1.3/2}.

In an embodiment, 15 is the maximum value of L1-RSRPs, and the candidate cell where 15 is located is Candidate cell 1, that is, the cell measurement results include the first absolute value 15. On this basis, the cell measurement results also include the first differential values of Candidate cells 2 and 3, namely 7/15 and 2/15. In addition, the cell measurement results also include second differential values of each candidate cell, namely, differential values {14.8/15, 14.6/15; 14.3/15} with respect to the absolute value 15 of the first L1-RSRP for Candidate cell 1, differential values {6.8/7, 6.4/7, 6.3/7} with respect to the absolute value 7 of the first L1-RSRP for Candidate cell 2, and differential values {1.5/2, 1.7/2, 1.3/2} with respect to the absolute value 2 of the first L1-RSRP for Candidate cell 3.

Based on any of the above embodiments, in the cell measurement results, the absolute value of the at least one L1-RSRP includes second absolute values of L L1-RSRPs, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

Specifically, after the L1-RSRPs for the L candidate cells are obtained, an absolute value of the first L1-RSRP among the M L1-RSRPs for each candidate cell may be used as the second absolute value for each candidate cell, and the cell measurement results include L second absolute values.

In addition, the second differential values of (M-1)*L L1-RSRPs may also be determined. The second differential values of (M-1)*L L1-RSRPs here correspond to the L candidate cells, and specifically correspond to the differential values of M-1 L1-RSRPs in each candidate cell, that is, differential values of the absolute value of the remaining M-1 L1-RSRPs other than the first L1-RSRP with respect to the absolute value of the first L1-RSRP in each candidate cell.

For example, the base station indicates the UE to measure and report the L1-RSRP/L1-SINR of three candidate cells, candidate cell 1, candidate cell 2, and candidate cell 3. The UE measures the L1-RSRP/L1-SINR for candidate cell 1 and obtains the following measurement results:
Candidate cell 1 {15; 14.8; 14.6; 14.3};
Candidate cell 2 {7; 6.8; 6.4; 6.3};
Candidate cell 3 {2; 1.5; 1.7; 1.3}.

In case that the UE reports the cell measurement results, the measurement values of each candidate cell are differentiated, and the finally reported cell measurement results are:
Candidate cell 1{15,14.8/15,14.6/15; 14.3/15};
Candidate cell 2{7,6.8/7,6.4/7,6; 3/7};
Candidate cell 3{2,1.5/2,1.7/2,1.3/2}.

In an embodiment, the cell measurement result includes the second absolute values 15, 7, and 2 corresponding to the three candidate cells. On this basis, the cell measurement results also include second differential values of three candidate cells, namely, differential values {14.8/15, 14.6/15; 14.3/15} with respect to the absolute value 15 of the first L1-RSRP for Candidate cell 1, differential values {6.8/7, 6.4/7, 6.3/7} with respect to the absolute value 7 of the first L1-RSRP for Candidate cell 2, and differential values {1.5/2, 1.7/2, 1.3/2} with respect to the absolute value 2 of the first L1-RSRP for Candidate cell 3.

Based on any one embodiment above, before sending the cell handover signaling to the UE, the method further includes:
sending configuration information of a transmission configuration indicator (TCI) state of a beam in the candidate cells to the UE.

Specifically, after determining the candidate cells, the network device may not only send the configuration information of the candidate cells to the UE, but also send the configuration information of the TCI state of the beam in the candidate cell to the UE.

Correspondingly, the cell handover signaling may indicate the target cell and/or target beam to which the cell handover is performed while indicating to perform the cell handover. Thus, after receiving the cell handover signaling, the UE may determine the target cell and target beam indicated by the cell handover signaling. For example, the UE may determine the target cell based on the cell handover signaling, and selects a beam of which the TCI state is an activated state from various beams in the target cell as the target beam; or determine the target beam based on the cell handover signaling, and then determines the candidate cell to which the target beam belongs as the target cell. The embodiment of the present application does not specifically limit this.

In an embodiment, after completing the configuration of the TCI state of the beam in each candidate cell, the network device may also activate/deactivate the TCI state of the beam in each candidate cell. In order to facilitate the simultaneous cell handover and beam switching, the target beam is limited to the beam of which the TCI state is an activated state in the target cell, that is, the target beam itself is the beam of the target cell, and the TCI state of the target beam is the activated state.

In the method provided by the embodiment of the present application, the TCI state is configured for the candidate cell, which provides conditions for simultaneously performing the cell handover and the beam switching, and helps to reduce the delay caused by the handover.

Based on any of the above embodiments, in order to simultaneously perform the cell handover and the beam switching, the cell handover signaling is a first signaling with a first field; the first signaling is used to indicate a target beam and the first field is used to indicate whether the first signaling carries information for cell handover.

Specifically, the first signaling may be DCI, and the first signaling itself has a function of indicating the beam. A first field may be set in the first signaling to indicate whether the first signaling carries information for cell handover. The first field here may be added on the basis of the original first signaling, or may be one field in the original first signaling, and for a first field currently in use, a special value may be used to indicate whether the first signaling carries information for cell handover.

In an embodiment, in case that the first field set in the first signaling indicates that the first signaling carries information for cell handover, the beam indicated by the first signaling itself is the target beam for cell handover.

For example, the first signaling may be a DCI indicated by a beam, specifically DCI format 1_1/1_2, and a field may be newly added in the DCI as the first field. A length of the first field is 1 bit, which is used to indicate whether the first signaling is a DCI carrying information for cell handover or a DCI that only indicates a beam.

In case of receiving the first signaling indicating only the target beam, the UE may determine the candidate cell to which the target beam belongs, that is, the target cell, based on beams of each candidate cell indicated by the configuration information of the candidate cells.

Alternatively, in order to simultaneously perform the cell handover and the beam switching, the cell handover signaling is a second signaling with a second field; the second signaling is used to indicate whether the second signaling carries information for cell handover and further indicate the target cell.

Specifically, the second signaling may be DCI, and the second signaling itself has a function of indicating the beam. A second field may be set in the second signaling to indicate whether the second signaling carries information for the cell handover and indicates the target cell for the cell handover. The second field here may be added on the basis of the original second signaling, or may be two fields in the original second signaling, and for a second field currently in use, a special value may be used to indicate whether the second signaling carries information for cell handover.

In an embodiment, in case that the second field set in the first signaling indicates that the second signaling carries information for cell handover, the beam indicated by the second signaling itself is the target beam for cell handover and a cell indicated by the second field in the second signaling is the target cell for cell handover.

For example, the second signaling may be a DCI indicating a beam, specifically a DCI format 1_1/1_2, and one field may be newly added in the DCI as the second field. The second field may be specifically divided into two parts, one of which may be denoted as handover _indicator to indicate whether the second signaling carries information for cell handover, and the other may be denoted as PCI _indicator to indicate the target cell for cell handover. For another example, special values of certain fields in DCI format 1_1/1_2 may be used to indicate that the DCI carries information for cell handover, and at the same time indicate a PCI or PCI indicator of the target cell in the DCI.

In case of receiving the second signaling, the UE may determine the target beam indicated by the second signaling and the target cell indicated by the second field carried in the second signaling.

Alternatively, in order to simultaneously perform the cell handover and the beam switching, the cell handover signaling is a third signaling carrying a third field, where the third signaling is used to activate a target TCI state, and the third field is used to indicate whether the third signaling carries information for the cell handover.

Specifically, the third signaling may be an MAC-CE, and the third signaling itself has a function of activating the TCI state. The third field may be set in the third signaling to indicate whether the third signaling carries information for the cell handover. The third field here may be added on the basis of the original third signaling.

In an embodiment, in case that the third field set in the third signaling indicates that the third signaling carries information for cell handover, the TCI state activated by the third signaling itself is the TCI state corresponding to the target beam in the target cell for cell handover.

In case of receiving the third signaling, the UE may determine the target TCI state activate by the third signaling, and then determine the beam corresponding to the target TCI state as the target beam based on the configuration information of the TCI state of each beam in the candidate cell, and determine the cell to which the beam belongs as the target cell.

In the method provided by the embodiment of the present application, the target cell and the target beam are indicated to the UE by any of the first signaling, the second signaling or the third signaling, which provides conditions for simultaneously performing the cell handover and the beam switching, and further shortens the time consumption of the cell handover.

Based on any of the above embodiments, in order to perform simultaneously cell handover and beam switching, it is necessary to activate candidate TCI states of candidate beams that may be the target beam before the cell handover. Therefore, after sending the configuration information of the transmission configuration indicator (TCI) state of the beam in the candidate cells to the UE, the method further includes:
sending a TCI state activation signaling to the UE to enable the UE to activate candidate TCI states indicated by the TCI state activation signaling;
where a number of candidate TCI states indicated by the TCI state activation signaling to be activated is less than or equal to a preset number threshold.

Specifically, the network device may determine the candidate TCI states that need to be activated based on the cell measurement results reported by the UE, and then generate the TCI state activation signaling and send the TCI state activation signaling to the UE.

After receiving the TCI state activation signaling, the UE may determine candidate TCI states that need to be activated indicated by the TCI state activation signaling and activate the candidate TCI state.

In order to solve the problem of unnecessary cell handover caused by frequent beam switching, the embodiment of the present application limits the TCI state activation signaling, that is, a number of candidate TCI states activated by the TCI state activation signaling is less than or equal to the preset number threshold. By setting the preset number threshold and limiting the maximum number of TCI states that may be activated, the total number of switchable beams is limited, thereby avoiding the frequent beam switching.

Based on any of the above embodiments, for the case of performing the cell handover first and then the beam switching, the cell handover signaling is a fourth signaling used for activating the target cell.

Specifically, the fourth signaling may be an MAC-CE. The fourth signaling itself has a function of activating the cell. After receiving the fourth signaling, the UE may determine a cell activated by the fourth signaling as the target cell.

In the method provided by the embodiment of the present application, the target cell indicated to the UE by the fourth signaling, which provides conditions for realizing the way of performing the cell handover first and then the beam switching.

Based on any of the above embodiments, for the case of performing the cell handover first and then the beam switching, an embodiment of the present application provides the following cell handover method.

Step 1: the network device notifies the UE of measuring a beam of a cell through RRC configuration (CSI-ReportConfig). Here, CSI-ReportConfig contains cell-level L1-RSRP information. The UE reports the cell measurement results based on the configuration of the network device, that is, cell-level L1-RSRP values of adjacent cells PCI1, PCI2, PCI3, PCI4, PCI5, PCI6, and PCI7: L1-RSRP1~L1-RSRP7. After receiving the cell measurement results, the network device sorts the L1-RSRP values contained in the cell measurement results to determine the candidate cells to be PCI1, PCI3, PCI5, and PCI7.

Step 2: the network device sends configuration information of the candidate cells to the UE through the RRC signaling RRCPhysicalCell, specifically adding the candidate cells PCI1, PCI3, PCI5, PCI7 to the UE, and configuring configuration information of the candidate cells, such as indexes, frequency bands, etc.

Here, the correspondence between candidate cell indexes and the candidate cells is shown in the following table:

| PCI1 | PCI3 | PCI5 | PCI7 |
|---|---|---|---|
| 00 | 01 | 11 | 10 |

As shown in the above table, an index of the candidate cell PCI1 is 00, an index of PCI3 is 01, an index of PCI5 is 11, and an index of PCI7 is 10.

Step 3: the network device sends the configuration information of TCI states of the beam in the candidate cells to the UE through RRC signaling, specifically configuring TCI states {TCI state1, TCI state2, TCI state3, TCI state4, TCI state5, TCI state 6, TCI state7, TCI state8} to the UE.

Step 4: the network device activates the candidate cells configured in step 2 through a MAC-CE signaling (cell handover signaling). The MAC-CE used to activate the target cell is shown in the following table, for example, the bitmap is 0x04=00000100, where the C₂ bit is 1, indicating that the candidate cell with index 2 in the candidate cell is activated. The MAC-CE here is the fourth signaling in the above embodiments.

| | | | | | | | |
|---|---|---|---|---|---|---|---|
| C₇ | C₆ | C₅ | C₄ | C₃ | C₂ | C₁ | C₀ |

Step 5: after the UE receives the fourth signaling sent from the network device, i.e., the MAC-CE signaling, performs handover to the candidate cell of PCI3 based on the corresponding relationship between the candidate cell indexes and the candidate cells, i.e., determines the candidate cell of PCI3 as the target cell and performs cell handover.

Step 6: after the network device performs handover to the target cell, uses an SSB beam for the initial access as the default beam for downlink reception before a new beam is valid, and uses a beam for the random access as the default beam for uplink transmission; or, the UE uses the receive beam of the type D source RS contained in the TCI state (TCI state1) with the lowest ID in the TCI state pool as the default beam for downlink/uplink reception/transmission.

Step 7: the UE reports a HARQ/ACK indicated by the new beam to the target cell.

Step 8: After the new beam is valid, the UE uses the new beam to notify the target cell (PCI3) has been successfully accessed.

Based on any of the above embodiments, for the case of performing the cell handover first and then the beam switching, an embodiment of the present application further provides the following cell handover method.

Step 1: the network device notifies the UE of measuring a beam of a cell through RRC configuration (CSI-ReportConfig). Here, CSI-ReportConfig contains cell-level L1-RSRP information. The UE reports the cell measurement results based on the configuration of the network device, that is, cell-level L1-RSRP values of adjacent cells PCI1, PCI2, PCI3, PCI4, PCI5, PCI6, and PCI7: L1-RSRP1~L1-RSRP7. After receiving the cell measurement results, the network device sorts the L1-RSRP values contained in the cell measurement results to determine the candidate cells to be PCI1, PCI3, PCI5, and PCI7.

Step 2: the network device sends configuration information of the candidate cells to the UE through the RRC signaling RRCPhysicalCell, specifically adding the candidate cells PCI1, PCI3, PCI5, PCI7 to the UE, and configuring configuration information of the candidate cells, such as indexes, frequency bands, etc.

Here, the correspondence between candidate cell indexes and the candidate cells is shown in the following table:

| PCI1 | PCI3 | PCI5 | PCI7 |
|---|---|---|---|
| 00 | 01 | 11 | 10 |

As shown in the above table, an index of the candidate cell PCI1 is 00, an index of PCI3 is 01, an index of PCI5 is 11, and an index of PCI7 is 10.

Step 3: the network device sends the configuration information of TCI states of the beam in the candidate cells to the UE through RRC signaling, specifically configuring TCI states {TCI state1, TCI state2, TCI state3, TCI state4, TCI state5, TCI state 6, TCI state7, TCI state8} to the UE. The additional PCIs are {PCI3, PCI3, PCI3, PCI7, PCI1, PCI1, PCI5} respectively.

Step 4: the network device activates {TCI state1, TCI state2, TCI state3, TCI state8} through the TCI state activation signaling based on the cell-level L1-RSRP in the cell measurement results reported from the UE in step 1, and the corresponding additional PCIs are {PCI3, PCI3, PCI3, PCI5} respectively. The TCI state activation signaling here is MAC-CE.

Step 5A: the network device sends DCI format 1_2, which contains TCI state 1, to notify the UE to use the beam indicated by TCI state1 in PCI3 for uplink/downlink data transmission; or,
step 5B: the network device sends the MAC-CE to activate TCI statel, and notifies the UE to use the beam indicated by TCI state1 in PCI3 for uplink/downlink data transmission.

Step 6A: the network device sends DCI2, i.e., a cell handover command, which contains the handover target cell index (01), indicating he UE to perform handover to the target cell corresponding to PCI3; or,
step 6B: the network device sends an MAC-CE signaling, i.e., a cell handover command, which includes a handover target cell index (01), indicating the UE to perform handover to the target cell corresponding to PCI3.

Step 7: The UE performs handover to the target cell corresponding to PCI3 based on the indication of the network device and uses the receive beam of the type D source RS in TCI state1 as the default beam to notify the target cell has been successfully accessed.

Based on any of the above embodiments, for the case of simultaneously performing the cell handover and the beam switching, the embodiment of the present application further provides the following cell handover method, which performs cell handover through RRC+DCI.

Step 1: the network device notifies the UE of measuring a beam of a cell through RRC configuration (CSI-ReportConfig). Here, CSI-ReportConfig contains cell-level L1-RSRP information. The UE reports the cell measurement results based on the configuration of the network device, that is, cell-level L1-RSRP values of adjacent cells PCI1, PCI2, PCI3, PCI4, PCI5, PCI6, and PCI7: L1-RSRP1~L1-RSRP7. After receiving the cell measurement results, the network device sorts the L1-RSRP values contained in the cell measurement results to determine the candidate cells to be PCI1, PCI3, PCI5, and PCI7, and the serving cell PCI for the UE is PCI1.

Step 2: the network device sends configuration information of the candidate cells to the UE through the RRC signaling RRCPhysicalCell, specifically adding the candidate cells PCI1, PCI3, PCI5, PCI7 to the UE, and configuring configuration information of the candidate cells, such as indexes, frequency bands, etc.

Here, the correspondence between candidate cell indexes and the candidate cells is shown in the following table:

| PCI1 | PCI3 | PCI5 | PCI7 |
|---|---|---|---|
| 00 | 01 | 11 | 10 |

As shown in the above table, an index of the candidate cell PCI1 is 00, an index of PCI3 is 01, an index of PCI5 is 11, and an index of PCI7 is 10.

Step 3: the network device sends the configuration information of TCI states of the beam in the candidate cells to the UE through RRC signaling, specifically configuring TCI states {TCI state1, TCI state2, TCI state3, TCI state4, TCI state5, TCI state 6, TCI state7, TCI state8} to the UE. The additional PCIs are {PCI3, PCI3, PCI3, PCI7, PCI1, PCI1, PCI5} respectively.

Step 4: the network device activates {TCI state1, TCI state2, TCI state3, TCI state7} through the TCI state activation signaling based on the cell-level L1-RSRP in the cell measurement results reported from the UE in step 1, and the corresponding additional PCIs are {PCI3, PCI3, PCI3, PCI1} respectively. The TCI state activation signaling here is MAC-CE.

Step 5: the network device notifies the UE of performing cell handover through a newly added field handover_indicator of 1 in DCI (DCI format 1_1) indicated by the beam, and the target cell ID is the additional PCI-PCI3 in TCI state-TCI state1 contained in the DCI. The DCI here is a first signaling, and the handover _indicator is a first field.

Step 6: the UE receives the first signaling sent from the network device, and determines that the additional PCI contained in TCI state1 is PCI3 based on the indication of the network device, that is, PCI3 is the target cell, and the beam in TCI state1 is the target beam. The UE performs handover to PCI3 and uses the target beam in TCI state 1 on PCI3 to transmit data with the target cell.

Step 7: The UE uses the SSB beam for initial access to provide HARQ/ACK feedback for the beam indication to the target cell.

Step 8: after the new beam is valid, the UE uses the receive beam of the type D source RS in TCI state1 to notify the target cell has been successfully accessed.

Based on any of the above embodiments, for the case of simultaneously performing the cell handover and the beam switching, the embodiment of the present application further provides the following cell handover method, which performs cell handover through RRC+DCI and indicates the target cell through a PCI indicator indicated in the DCI.

Step 1: the network device notifies the UE of measuring a beam of a cell through RRC configuration (CSI-ReportConfig). Here, CSI-ReportConfig contains cell-level L1-RSRP information. The UE reports the cell measurement results based on the configuration of the network device, that is, cell-level L1-RSRP values of adjacent cells PCI1, PCI2, PCI3, PCI4, PCI5, PCI6, and PCI7: L1-RSRP1~L1-RSRP7. After receiving the cell measurement results, the network device sorts the L1-RSRP values contained in the cell measurement results to determine the candidate cells to be PCI1, PCI3, PCI5, and PCI7, and the serving cell PCI for the UE is PCI1.

Step 2: the network device sends configuration information of the candidate cells to the UE through the RRC signaling RRCPhysicalCell, specifically adding the candidate cells PCI1, PCI3, PCI5, PCI7 to the UE, and configuring configuration information of the candidate cells, such as indexes, frequency bands, etc.

Here, the correspondence between candidate cell indexes and the candidate cells is shown in the following table:

| PCI1 | PCI3 | PCI5 | PCI7 |
|---|---|---|---|
| 00 | 01 | 11 | 10 |

As shown in the above table, an index of the candidate cell PCI1 is 00, an index of PCI3 is 01, an index of PCI5 is 11, and an index of PCI7 is 10.

Step 3: the network device sends the configuration information of TCI states of the beam in the candidate cells to the UE through RRC signaling, specifically configuring TCI states {TCI state1, TCI state2, TCI state3, TCI state4, TCI state5, TCI state 6, TCI state7, TCI state8} to the UE. The additional PCIs are {PCI3, PCI3, PCI3, PCI7, PCI1, PCI1, PCI5} respectively.

Step 4: the network device activates {TCI state1, TCI state2, TCI state3, TCI state7} through the TCI state activation signaling based on the cell-level L1-RSRP in the cell measurement results reported from the UE in step 1, and the corresponding additional PCIs are {PCI3, PCI3, PCI3, PCI1} respectively. The TCI state activation signaling here is MAC-CE.

Step 5: the network device notifies the UE of performing cell handover through a newly added field handover_indicator of 1 in DCI (DCI format 1_1) indicated by the beam, and indicates, in the newly added field PCI _indicator in the DCI, that the PCI of the target cell to be handed over is 01. The DCI here is a second signaling, and the newly added fields handover_indicator and PCI_indicator constitute the second field.

Step 6: the UE receives the second signaling sent from the network device, and determines that the target cell to be handed over is PCI3 based on the indication of the network device and the target beam is the beam in TCI state1. The UE performs handover to PCI3 and uses the beam in TCI state 1 on PCI3 to transmit data with the target cell.

Step 7: The UE uses the SSB beam for initial access to provide HARQ/ACK feedback for the beam indication to the target cell.

Step 8: after the new beam is valid, the UE uses the receive beam of the type D source RS in TCI state1 to notify the target cell has been successfully accessed.

Based on any of the above embodiments, for the case of simultaneously performing the cell handover and the beam switching, the embodiment of the present application further provides the following cell handover method, which performs cell handover through RRC+MCE-CE.

Step 1: the network device notifies the UE of measuring a beam of a cell through RRC configuration (CSI-ReportConfig). Here, CSI-ReportConfig contains cell-level L1-RSRP information. The UE reports the cell measurement results based on the configuration of the network device, that is, cell-level L1-RSRP values of adjacent cells PCI1, PCI2, PCI3, PCI4, PCI5, PCI6, and PCI7: L1-RSRP1~L1-RSRP7. After receiving the cell measurement results, the network device sorts the L1-RSRP values contained in the cell measurement results to determine the candidate cells to be PCI1, PCI3, PCI5, and PCI7, and the serving cell PCI for the UE is PCI1.

Step 2: the network device sends configuration information of the candidate cells to the UE through the RRC signaling RRCPhysicalCell, specifically adding the candidate cells PCI1, PCI3, PCI5, PCI7 to the UE, and configuring configuration information of the candidate cells, such as indexes, frequency bands, etc.

Here, the correspondence between candidate cell indexes and the candidate cells is shown in the following table:

| PCI1 | PCI3 | PCI5 | PCI7 |
|---|---|---|---|
| 00 | 01 | 11 | 10 |

As shown in the above table, an index of the candidate cell PCI1 is 00, an index of PCI3 is 01, an index of PCI5 is 11, and an index of PCI7 is 10.

Step 3: the network device sends the configuration information of TCI states of the beam in the candidate cells to the UE through RRC signaling, specifically configuring TCI states {TCI state1, TCI state2, TCI state3, TCI state4, TCI state5, TCI state 6, TCI state7, TCI state8} to the UE. The additional PCIs are {PCI3, PCI3, PCI3, PCI7, PCI1, PCI1, PCI5} respectively.

Step 4: the network device activates {TCI state1} through the MAC-CE signaling based on the cell-level L1-RSRP in the cell measurement results reported from the UE in step 1, and the additional PCI corresponding to the TCI state1 is PCI3. At the same time, the network device notifies the UE of performing cell handover through the newly added field handover _indicator in MAC-CE with a value of 1, and the target cell ID is additional PCI-PCI3 in TCI state 1 contained in MAC-CE. The MAC-CE here is a third signaling, and the newly added field handover_indicator is a third field.

Step 5: the UE receives the third signaling sent from the network device, and determines that the additional PCI contained in TCI state1 is PCI3 based on the indication of the network device. The UE performs handover to the target cell PCI3.

Step 6: The UE uses a beam used in a serving cell before handover to perform HARQ/ACK feedback for the beam indication to the serving cell.

Step 7: after the new beam is valid, the UE uses the receive beam of the type D source RS in TCI state1 to notify the target cell has been successfully accessed.

In the methods for cell handover provided in the above embodiments, the UE may reduce the delay caused by the handover by performing the beam switching and cell handover simultaneously during L1/L2 mobility. In addition, the problem of frequent cell handover caused by frequent beam switching is avoided by limiting the number of TCI states activated by MAC-CE. At the same time, the embodiments of the present application further solve a problem of what kind of default beam to use after the cell handover and before the new beam indication, which avoids the situation that downlink/uplink performance is reduced since the UE does not know what beam to use.

Based on any of embodiments above, FIG. 6 is a schematic structural diagram of a user equipment (UE) according to an embodiment of the present application. As shown in FIG. 6, the UE includes a memory 620, a transceiver 600, and a processor 610:
the memory 620 is used for storing a computer program; the transceiver 600 is used for receiving and sending data under the control of the processor; and the processor 610 is used for reading the computer program in the memory 620 and performing the following operations:
performing cell measurements on preset cells, and sending cell measurement results for the preset cells to a network device;
receiving configuration information of candidate cells sent from the network device, where the candidate cells are determined by the network device from the preset cells based on the cell measurement results;
receiving a cell handover signaling sent from the network device, and determining a target cell indicated by the cell handover signaling, where the target cell is one of the candidate cells; and
performing cell handover based on configuration information of the target cell;
   or,
performing cell measurements on candidate cells, and sending cell measurement results for the candidate cells to a network device, where the cell measurement results are used to determine a target cell;
receiving a cell handover signaling sent from the network device, and determining a target cell indicated by the cell handover signaling, where the target cell is one of the candidate cells; and
performing cell handover based on configuration information of the target cell;
where the cell measurement results include an absolute value of at least one Layer 1 reference signal receiving power (L1-RSRP), and differential values of at least one L1-RSRP. The transceiver 600 is used to receive and send data under control of the processor 610.

In FIG. 6, a bus architecture may include any number of interconnected buses and bridges, which are linked together through various circuits of one or more processors represented by the processor 610 and one or more memories represented by the memory 620. The bus architecture may also link together various other circuits, such as peripherals, voltage regulators, and power management circuits, which are well known in the art, and therefore will not be further described in the present application. The bus interface provides an interface. The transceiver 600 may be multiple elements, i.e., including a transmitter and a receiver, units for providing communication with various other devices over transmission media including wireless channels, wired channels, fiber optic cables, and the like. For different user equipment, the user interface 630 may also be an interface capable of externally or internally connecting the required equipment, and the connected equipment includes, but not limited to, a keypad, a display, a speaker, a microphone, a joystick, and the like.

The processor 610 is responsible for managing the bus architecture and general processing, and the memory 620 may store data used by the processor 610 when performing operations.

In an embodiment, the processor 610 may be a central processing unit (CPU), an application specific integrated circuit (ASIC), a field-programmable gate array (FPGA), or a complex programmable logic device (CPLD), the processor may also use a multi-core architecture.

The processor is configured to perform any of the methods of the embodiments of the present application based on an obtained executable instruction by calling the computer program stored in the memory. The processor and memory may also be physically separated.

In an embodiment, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, the absolute value of the at least one L1-RSRP includes second absolute values of L L1-RSRP, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, before receiving a cell handover signaling sent from the network device, the operations further include:
receiving configuration information of a transmission configuration indicator (TCI) state of a beam in the candidate cells sent from the network device;
where the determining the target cell indicated by the cell handover signaling includes:
   determining the target cell indicated by the cell handover signaling and a target beam, where the target beam is a beam of which the TCI state is an activated state in the target cell; and
   where the performing the cell handover based on configuration information of the target cell includes:
      performing the cell handover based on the configuration information of the target cell and performing beam switching based on configuration information of a TCI state of the target beam.

In an embodiment, the cell handover signaling is a first signaling with a first field; and
where the determining the target cell indicated by the cell handover signaling and the target beam includes:
determining a target beam indicated by the first signaling in case that the first field indicates that the first signaling carries information for cell handover; and
determining a cell to which the target beam belongs as the target cell based on the configuration information of the candidate cell.

In an embodiment, the cell handover signaling is a second signaling with a second field; and
where the determining the target cell indicated by the cell handover signaling and the target beam includes:
determining a target beam indicated by the second signaling and a target cell indicated by the second field in case that the second field indicates that the second signaling carries information for cell handover.

In an embodiment, the cell handover signaling is a third signaling with a third field; and
where the determining the target cell indicated by the cell handover signaling and the target beam includes:
in case that the third field indicates that the third signaling carries information for cell handover, activating a target TCI state based on the third signaling, and determining the target cell and the target beam based on the target TCI state.

In an embodiment, after receiving configuration information of a transmission configuration indicator (TCI) state of a beam in the candidate cells sent from the network device, the operations further include:
receiving a TCI state activation signaling sent from the network device; and
activating candidate TCI states indicated by the TCI state activation signaling;
where a number of candidate TCI states indicated by the TCI state activation signaling to be activated is less than or equal to a preset number threshold.

In an embodiment, the cell handover signaling is a fourth signaling; and
where the determining the target cell indicated by the cell handover signaling includes:
determining a cell indicated by the fourth signaling to be activated as the target cell.

In an embodiment, after performing the cell handover based on configuration information of the target cell, the operations further include:
before receiving a beam switching signaling sent from the network device, determining a default beam for the target cell, and performing information transmission based on the default beam.

In an embodiment, determining the default beam for the target cell includes:
determining a beam used for transmitting a synchronization signal block (SSB) in the target cell as a default beam for downlink transmission, and determining a beam used for random access in the target cell as a default beam for uplink transmission.

In an embodiment, before receiving a cell handover signaling sent from the network device, the operations further include:
receiving configuration information of a transmission configuration indicator (TCI) state of a beam in the candidate cells sent from the network device; and
where the determining the default beam for the target cell includes:
   determining the default beam based on a sequence number of a TCI state for the target cell.

It should be noted here that the above-mentioned UE according to the embodiments of the present application may implement all the method steps implemented by the above-mentioned method embodiments performed by the UE, and may achieve the same effect. The same parts and beneficial effects as the same method embodiments is not repeated in the present application.

FIG. 7 is a schematic structural diagram of a network device according to an embodiment of the present application. As shown in FIG. 7, the network device includes a memory 720, a transceiver 700, and a processor 710:
the memory 720 is used for storing a computer program; the transceiver 700 is used for receiving and sending data under the control of the processor; the processor 710 is used for reading the computer program in the memory and performing the following operations:
receiving cell measurement results of preset cells, determining candidate cells from the preset cells based on the cell measurement results, and sending configuration information of the candidate cells to a user equipment (UE), where the configuration information is used for cell handover; and
sending a cell handover signaling to the UE, where the cell handover signaling is used to indicate a target cell for cell handover, where the target cell is one of the candidate cells;
   or,
receiving cell measurement results of candidate cells, and determining a target cell based on the cell measurement results; and
sending a cell handover signaling to the UE, where the cell handover signaling is used to indicate a target cell for cell handover, where the target cell is one of the candidate cells;
where the cell measurement results include an absolute value of at least one Layer 1 reference signal receiving power (L1-RSRP), and differential values of at least one L1-RSRP.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits, which are well known in the art, and therefore will not be further described in the present application. The bus interface provides an interface. The transceiver 700 may be multiple elements, i.e., including a transmitter and a receiver, units for providing communication with various other devices over transmission media including wireless channels, wired channels, fiber optic cables, and the like.

The processor 710 is responsible for managing the bus architecture and general processing, and the memory 720 may store data used by the processor 710 when performing operations.

In an embodiment, the processor 710 may be a central processing unit (CPU), an application specific integrated circuit (ASIC), a field-programmable gate array (FPGA), or a complex programmable logic device (CPLD), the processor may also use a multi-core architecture.

The processor is configured to perform any of the methods of the embodiments of the present application based on an obtained executable instruction by calling the computer program stored in the memory. The processor and memory may also be physically separated.

In an embodiment, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, the absolute value of the at least one L1-RSRP includes second absolute values of L L1-RSRP, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, before sending a cell handover signaling to the UE, the operations further include:
sending configuration information of a transmission configuration indicator (TCI) state of a beam in the candidate cells to the UE.

In an embodiment, the cell handover signaling is a first signaling with a first field; the first signaling is used to indicate a target beam and the first field is used to indicate whether the first signaling carries information for cell handover; or
the cell handover signaling is a second signaling with a second field; the second signaling is used to indicate a target beam, the second field is used to indicate whether the second signaling carries information for cell handover, and the second field is further used to indicate the target cell; or
the cell handover signaling is a third signaling carrying a third field, where the third signaling is used to activate a target TCI state, and the third field is used to indicate whether the third signaling carries information for the cell handover.

In an embodiment, after sending configuration information of a transmission configuration indicator (TCI) state of a beam in the candidate cells to the UE, the operations further include:
sending a TCI state activation signaling to the UE to enable the UE to activate candidate TCI states indicated by the TCI state activation signaling;
where a number of candidate TCI states indicated by the TCI state activation signaling to be activated is less than or equal to a preset number threshold.

In an embodiment, the cell handover signaling is a fourth signaling used for activating the target cell.

It should be noted here that the above-mentioned network device according to the embodiments of the present application may implement all the method steps implemented by the above-mentioned method embodiments performed by the network device, and may achieve the same effect. The same parts and beneficial effects as the same method embodiments is not repeated in the present application.

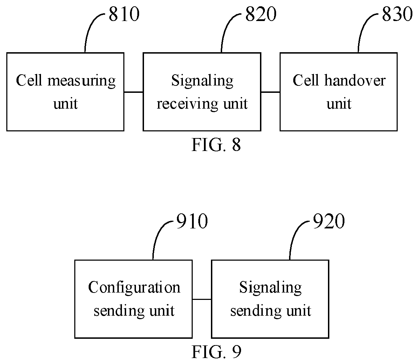

FIG. 8 is a first schematic structural diagram of an apparatus for cell handover according to an embodiment of the present application. As shown in FIG. 8, the apparatus for cell handover includes:
a cell measuring unit 810, used for performing cell measurements on candidate cells, and sending cell measurement results for the candidate cells to a network device, where the cell measurement results are used to determine a target cell;
a signaling receiving unit 820, used for receiving a cell handover signaling sent from the network device, and determining a target cell indicated by the cell handover signaling, where the target cell is one of the candidate cells; and
a cell handover unit 830, used for performing cell handover based on configuration information of the target cell;
where the cell measurement results include an absolute value of at least one Layer 1 reference signal receiving power (L1-RSRP), and differential values of at least one L1-RSRP.

In an embodiment, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, the absolute value of the at least one L1-RSRP includes second absolute values of L L1-RSRP, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, the apparatus further includes a configuration receiving unit, used for receiving configuration information of a transmission configuration indicator (TCI) state of a beam in the candidate cells sent from the network device;
the signaling receiving unit is used for determining the target cell indicated by the cell handover signaling and a target beam, where the target beam is a beam of which the TCI state is an activated state in the target cell; and
the cell handover unit is used for performing the cell handover based on the configuration information of the target cell and performing beam switching based on configuration information of a TCI state of the target beam.

In an embodiment, the cell handover signaling is a first signaling with a first field; and
the signaling receiving unit is used for determining a target beam indicated by the first signaling in case that the first field indicates that the first signaling carries information for cell handover; and
determining a cell to which the target beam belongs as the target cell based on the configuration information of the candidate cell.

In an embodiment, the cell handover signaling is a second signaling with a second field; and
the signaling receiving unit is used for determining a target beam indicated by the second signaling and a target cell indicated by the second field in case that the second field indicates that the second signaling carries information for cell handover.

In an embodiment, the cell handover signaling is a third signaling with a third field; and
the signaling receiving unit is used for, in case that the third field indicates that the third signaling carries information for cell handover, activating a target TCI state based on the third signaling, and determining the target cell and the target beam based on the target TCI state.

In an embodiment, the configuration receiving unit is further used for:
receiving a TCI state activation signaling sent from the network device; and
activating candidate TCI states indicated by the TCI state activation signaling;
where a number of candidate TCI states indicated by the TCI state activation signaling to be activated is less than or equal to a preset number threshold.

In an embodiment, the cell handover signaling is a fourth signaling; and
where the determining the target cell indicated by the cell handover signaling includes:
determining a cell indicated by the fourth signaling to be activated as the target cell.

In an embodiment, the cell handover unit is further used for: before receiving a beam switching signaling sent from the network device, determining a default beam for the target cell, and performing information transmission based on the default beam.

In an embodiment, the cell handover unit is used for determining a beam used for transmitting a synchronization signal block (SSB) in the target cell as a default beam for downlink transmission, and determining a beam used for random access in the target cell as a default beam for uplink transmission.

In an embodiment, the apparatus further includes a configuration receiving unit, used for receiving configuration information of a transmission configuration indicator (TCI) state of a beam in the candidate cells sent from the network device; and
the cell handover unit is used for determining the default beam based on a sequence number of a TCI state for the target cell.

The above-mentioned resource indication apparatus for cell handover according to the embodiments of the present application can implement all the method steps implemented by the above-mentioned method embodiments, performed by the UE and may achieve the same effect. The same parts and beneficial effects as the same method embodiments will not be repeated here.

FIG. 9 is a second schematic structural diagram of an apparatus for cell handover according to an embodiment of the present application. As shown in FIG. 9, the apparatus for cell handover includes:
a configuration sending unit 910, used for receiving cell measurement results of candidate cells, and determining a target cell based on the cell measurement results; and
a signaling sending unit 920, used for sending a cell handover signaling to the UE, where the cell handover signaling is used to indicate a target cell for cell handover, where the target cell is one of the candidate cells;
where the cell measurement results include an absolute value of at least one Layer 1 reference signal receiving power (L1-RSRP), and differential values of at least one L1-RSRP.

In an embodiment, the absolute value of the at least one L1-RSRP is a first absolute value of an L1-RSRP, and the differential values of the at least one L1-RSRP include first differential values of L-1 L1-RSRPs and second differential values of (M-1)*L L1-RSRPs;
where L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, where the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, the absolute value of the at least one L1-RSRP includes second absolute values of L L1-RSRP, and the differential values of the at least one L1-RSRP include second differential values of (M-1)*L L1-RSRPs;
where L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, where the M-1 L1-RSRPs are L1-RSRPs among M L1-RSRPs other than the first L1-RSRP for a candidate cell.

In an embodiment, the configuration sending unit is further used for:
sending configuration information of a transmission configuration indicator (TCI) state of a beam in the candidate cells to the UE.

In an embodiment, the cell handover signaling is a first signaling with a first field; the first signaling is used to indicate a target beam and the first field is used to indicate whether the first signaling carries information for cell handover; or
the cell handover signaling is a second signaling with a second field; the second signaling is used to indicate a target beam, the second field is used to indicate whether the second signaling carries information for cell handover, and the second field is further used to indicate the target cell; or
the cell handover signaling is a third signaling carrying a third field, where the third signaling is used to activate a target TCI state, and the third field is used to indicate whether the third signaling carries information for the cell handover.

In an embodiment, the signaling sending unit is further used for:
sending a TCI state activation signaling to the UE to enable the UE to activate candidate TCI states indicated by the TCI state activation signaling;
where a number of candidate TCI states indicated by the TCI state activation signaling to be activated is less than or equal to a preset number threshold.

In an embodiment, the cell handover signaling is a fourth signaling used for activating the target cell.

The above-mentioned resource indication apparatus for cell handover according to the embodiments of the present application can implement all the method steps implemented by the above-mentioned method embodiments, performed by the network device and may achieve the same effect. The same parts and beneficial effects as the same method embodiments will not be repeated here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

An embodiment of the present application further provides a processor-readable storage medium storing a computer program, where the computer program, when executed by a processor, causes the processor to perform the steps of the methods described above, which includes:
performing cell measurements on preset cells, and sending cell measurement results for the preset cells to a network device;
receiving configuration information of candidate cells sent from the network device, where the candidate cells are determined by the network device from the preset cells based on the cell measurement results;
receiving a cell handover signaling sent from the network device, and determining a target cell indicated by the cell handover signaling, where the target cell is one of the candidate cells; and
performing cell handover based on configuration information of the target cell;
or includes:
   receiving cell measurement results of preset cells, determining candidate cells from the preset cells based on the cell measurement results, and sending configuration information of the candidate cells to a user equipment (UE), where the configuration information is used for cell handover; and
   sending a cell handover signaling to the UE, where the cell handover signaling is used to indicate a target cell for cell handover, where the target cell is one of the candidate cells;
   or includes:
      performing cell measurements on candidate cells, and sending cell measurement results for the candidate cells to a network device, where the cell measurement results are used to determine a target cell;
      receiving a cell handover signaling sent from the network device, and determining a target cell indicated by the cell handover signaling, where the target cell is one of the candidate cells; and
      performing cell handover based on configuration information of the target cell;
      where the cell measurement results include an absolute value of at least one Layer 1 reference signal receiving power (L1-RSRP), and differential values of at least one L1-RSRP;
      or includes:
         receiving cell measurement results of candidate cells, and determining a target cell based on the cell measurement results; and
         sending a cell handover signaling to the UE, where the cell handover signaling is used to indicate a target cell for cell handover, where the target cell is one of the candidate cells;
         where the cell measurement results include an absolute value of at least one Layer 1 reference signal receiving power (L1-RSRP), and differential values of at least one L1-RSRP.

It should be noted that the processor-readable storage medium may be any available medium or data storage device that may be accessed by a processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In addition, the solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CN) via a radio access network (RAN), and the wireless terminal device may be a mobile terminal device, such as a mobile phone (or referred to as "cellular "phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an Internet protocol (IP) communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for cell handover, comprising:
performing cell measurements on candidate cells, and sending cell measurement results for the candidate cells to a network device, wherein the cell measurement results are used to determine a target cell;
receiving a cell handover signaling sent from the network device, and determining a target cell indicated by the cell handover signaling, wherein the target cell is one of the candidate cells; and
performing cell handover based on configuration information of the target cell;
wherein the cell measurement results comprise an absolute value of at least one Layer 1 reference signal receiving power (L1-RSRP), and differential values of at least one L1-RSRP.

2. The method of claim 1, wherein the absolute value of the at least one L1-RSRP is a first absolute value of an L1-RSRP, and the differential values of the at least one L1-RSRP comprise first differential values of L-1 L1-RSRPs and second differential values of (M-1)*L L1-RSRPs;
wherein L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, wherein the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

3. The method of claim 1, wherein the absolute value of the at least one L1-RSRP comprises second absolute values of L L1-RSRPs, and the differential values of the at least one L1-RSRP comprise second differential values of (M-1)*L L1-RSRPs;
wherein L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

4. The method of claim 1, wherein before receiving the cell handover signaling sent from the network device, the method further comprises:
receiving configuration information of a transmission configuration indicator (TCI) state of a beam in the candidate cells sent from the network device;
wherein the determining the target cell indicated by the cell handover signaling comprises:
determining the target cell indicated by the cell handover signaling and a target beam, wherein the target beam is a beam of which the TCI state is an activated state in the target cell; and
wherein the performing the cell handover based on configuration information of the target cell comprises:
performing the cell handover based on the configuration information of the target cell and performing beam switching based on configuration information of a TCI state of the target beam.

5. The method of claim 4, wherein the cell handover signaling is a first signaling with a first field; and
wherein the determining the target cell indicated by the cell handover signaling and the target beam comprises:
determining a target beam indicated by the first signaling in case that the first field indicates that the first signaling carries information for cell handover; and
determining a cell to which the target beam belongs as the target cell based on the configuration information of the candidate cell.

6. The method of claim 4, wherein the cell handover signaling is a second signaling with a second field; and
wherein the determining the target cell indicated by the cell handover signaling and the target beam comprises:
determining a target beam indicated by the second signaling and a target cell indicated by the second field in case that the second field indicates that the second signaling carries information for cell handover.

7. The method of claim 4, wherein the cell handover signaling is a third signaling with a third field; and
wherein the determining the target cell indicated by the cell handover signaling and the target beam comprises:
in case that the third field indicates that the third signaling carries information for cell handover, activating a target TCI state based on the third signaling, and determining the target cell and the target beam based on the target TCI state.

8. The method of any of claims 4 to 7, wherein after receiving the configuration information of the TCI state of the beam in the candidate cells sent from the network device, the method further comprises:
receiving a TCI state activation signaling sent from the network device; and
activating candidate TCI states indicated by the TCI state activation signaling;
wherein a number of candidate TCI states indicated by the TCI state activation signaling to be activated is less than or equal to a preset number threshold.

9. The method of claim 1, wherein the cell handover signaling is a fourth signaling; and
wherein the determining the target cell indicated by the cell handover signaling comprises:
determining a cell indicated by the fourth signaling to be activated as the target cell.

10. The method of claim 1 or 9, wherein after performing cell handover based on the configuration information of the target cell, the method further comprises:
before receiving a beam switching signaling sent from the network device, determining a default beam for the target cell, and performing information transmission based on the default beam.

11. The method of claim 10, wherein determining the default beam for the target cell comprises:
determining a beam used for transmitting a synchronization signal block (SSB) in the target cell as a default beam for downlink transmission, and determining a beam used for random access in the target cell as a default beam for uplink transmission.

12. The method of claim 10, wherein before receiving the cell handover signaling sent from the network device, the method further comprises:
receiving configuration information of a transmission configuration indicator (TCI) state of a beam in the candidate cells sent from the network device; and
wherein the determining the default beam for the target cell comprises:
determining the default beam based on a sequence number of a TCI state for the target cell.

13. A method for cell handover, comprising:
receiving cell measurement results of candidate cells, and determining a target cell based on the cell measurement results; and
sending a cell handover signaling to a user equipment (UE), wherein the cell handover signaling is used to indicate a target cell for cell handover, wherein the target cell is one of the candidate cells;
wherein the cell measurement results comprise an absolute value of at least one Layer 1 reference signal receiving power (L1-RSRP), and differential values of at least one L1-RSRP.

14. The method of claim 13, wherein the absolute value of the at least one L1-RSRP is a first absolute value of an L1-RSRP, and the differential values of the at least one L1-RSRP comprise first differential values of L-1 L1-RSRPs and second differential values of (M-1)*L L1-RSRPs;
wherein L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, wherein the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

15. The method of claim 13, wherein the absolute value of the at least one L1-RSRP comprises second absolute values of L L1-RSRPs, and the differential values of the at least one L1-RSRP comprise second differential values of (M-1)*L L1-RSRPs;
wherein L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

16. The method of claim 13, wherein before sending the cell handover signaling to the UE, the method further comprises:
sending configuration information of a transmission configuration indicator (TCI) state of a beam in the candidate cells to the UE.

17. The method of claim 13, wherein the cell handover signaling is a first signaling with a first field; the first signaling is used to indicate a target beam, and the first field is used to indicate whether the first signaling carries information for cell handover; or
the cell handover signaling is a second signaling with a second field; the second signaling is used to indicate a target beam, the second field is used to indicate whether the second signaling carries information for cell handover, and the second field is further used to indicate the target cell; or
the cell handover signaling is a third signaling carrying a third field, wherein the third signaling is used to activate a target TCI state, and the third field is used to indicate whether the third signaling carries information for the cell handover.

18. The method of claim 16 or 17, wherein after sending the configuration information of the TCI state of the beam in the candidate cells to the UE, the method further comprises:
sending a TCI state activation signaling to the UE to enable the UE to activate candidate TCI states indicated by the TCI state activation signaling;
wherein a number of candidate TCI states indicated by the TCI state activation signaling to be activated is less than or equal to a preset number threshold.

19. The method of claim 13, wherein the cell handover signaling is a fourth signaling used for activating the target cell.

20. A user equipment (UE), comprising a memory, a transceiver and a processor,
wherein the memory is used for storing a computer program, the transceiver is used for receiving and sending data under control of the processor and the processor is used for reading the computer program in the memory and performing the following operations:
performing cell measurements on candidate cells, and sending cell measurement results for the candidate cells to a network device, wherein the cell measurement results are used to determine a target cell;
receiving a cell handover signaling sent from the network device, and determining a target cell indicated by the cell handover signaling, wherein the target cell is one of the candidate cells; and
performing cell handover based on configuration information of the target cell;
wherein the cell measurement results comprise an absolute value of at least one Layer 1 reference signal receiving power (L1-RSRP), and differential values of at least one L1-RSRP.

21. The UE of claim 20, wherein the absolute value of the at least one L1-RSRP is a first absolute value of an L1-RSRP, and the differential values of the at least one L1-RSRP comprise first differential values of L-1 L1-RSRPs and second differential values of (M-1)*L L1-RSRPs;
wherein L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, wherein the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

22. The UE of claim 20, wherein the absolute value of the at least one L1-RSRP comprises second absolute values of L L1-RSRPs, and the differential values of the at least one L1-RSRP comprise second differential values of (M-1)*L L1-RSRPs;
wherein L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

23. The UE of claim 20, wherein before receiving the cell handover signaling sent from the network device, the operations further comprise:
receiving configuration information of a transmission configuration indicator (TCI) state of a beam in the candidate cells sent from the network device;
wherein the determining the target cell indicated by the cell handover signaling comprises:
determining the target cell indicated by the cell handover signaling and a target beam, wherein the target beam is a beam of which the TCI state is an activated state in the target cell; and
wherein the performing the cell handover based on configuration information of the target cell comprises:
performing the cell handover based on the configuration information of the target cell and performing beam switching based on configuration information of a TCI state of the target beam.

24. The UE of claim 23, wherein the cell handover signaling is a first signaling with a first field; and
wherein the determining the target cell indicated by the cell handover signaling and the target beam comprises:
determining a target beam indicated by the first signaling in case that the first field indicates that the first signaling carries information for cell handover; and
determining a cell to which the target beam belongs as the target cell based on the configuration information of the candidate cell.

25. The UE of claim 23, wherein the cell handover signaling is a second signaling with a second field; and
wherein the determining the target cell indicated by the cell handover signaling and the target beam comprises:
determining a target beam indicated by the second signaling and a target cell indicated by the second field in case that the second field indicates that the second signaling carries information for cell handover.

26. The UE of claim 23, wherein the cell handover signaling is a third signaling with a third field; and
wherein the determining the target cell indicated by the cell handover signaling and the target beam comprises:
in case that the third field indicates that the third signaling carries information for cell handover, activating a target TCI state based on the third signaling, and determining the target cell and the target beam based on the target TCI state.

27. The UE of any of claims 23 to 26, wherein after receiving the configuration information of the TCI state of the beam in the candidate cells sent from the network device, the operations further comprise:
receiving a TCI state activation signaling sent from the network device; and
activating candidate TCI states indicated by the TCI state activation signaling;
wherein a number of candidate TCI states indicated by the TCI state activation signaling to be activated is less than or equal to a preset number threshold.

28. The UE of claim 20, wherein the cell handover signaling is a fourth signaling; and
wherein the determining the target cell indicated by the cell handover signaling comprises:
determining a cell indicated by the fourth signaling to be activated as the target cell.

29. The UE of claim 20 or 28, wherein after performing cell handover based on the configuration information of the target cell, the operations further comprise:
before receiving a beam switching signaling sent from the network device, determining a default beam for the target cell, and performing information transmission based on the default beam.

30. The UE of claim 29, wherein determining the default beam for the target cell comprises:
determining a beam used for transmitting a synchronization signal block (SSB) in the target cell as a default beam for downlink transmission, and determining a beam used for random access in the target cell as a default beam for uplink transmission.

31. The UE of claim 29, wherein before receiving the cell handover signaling sent from the network device, the operations further comprises:
receiving configuration information of a transmission configuration indicator (TCI) state of a beam in the candidate cells sent from the network device; and
wherein the determining the default beam for the target cell comprises:
determining the default beam based on a sequence number of a TCI state for the target cell.

32. A network device, comprising a memory, a transceiver and a processor,
wherein the memory is used for storing a computer program, the transceiver is used for receiving and sending data under control of the processor and the processor is used for reading the computer program in the memory and performing the following operations:
receiving cell measurement results of candidate cells, and determining a target cell based on the cell measurement results; and
sending a cell handover signaling to a user equipment (UE), wherein the cell handover signaling is used to indicate a target cell for cell handover, wherein the target cell is one of the candidate cells;
wherein the cell measurement results comprise an absolute value of at least one Layer 1 reference signal receiving power (L1-RSRP), and differential values of at least one L1-RSRP.

33. The network device of claim 32, wherein the absolute value of the at least one L1-RSRP is a first absolute value of an L1-RSRP, and the differential values of the at least one L1-RSRP comprise first differential values of L-1 L1-RSRPs and second differential values of (M-1)*L L1-RSRPs;
wherein L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, wherein the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

34. The network device of claim 32, wherein the absolute value of the at least one L1-RSRP comprises second absolute values of L L1-RSRPs, and the differential values of the at least one L1-RSRP comprise second differential values of (M-1)*L L1-RSRPs;
wherein L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to the first L1-RSRP for L candidate cells respectively, and the M-1 L1-RSRPs are L1-RSRPs among M L1-RSRPs other than the first L1-RSRP for a candidate cell.

35. The network device of claim 32, wherein before sending the cell handover signaling to the UE, the operations further comprises:
sending configuration information of a transmission configuration indicator (TCI) state of a beam in the candidate cells to the UE.

36. The network device of claim 32, wherein the cell handover signaling is a first signaling with a first field; the first signaling is used to indicate a target beam and the first field is used to indicate whether the first signaling carries information for cell handover; or
the cell handover signaling is a second signaling with a second field;
the second signaling is used to indicate a target beam, the second field is used to indicate whether the second signaling carries information for cell handover, and the second field is further used to indicate the target cell; or
the cell handover signaling is a third signaling carrying a third field, wherein the third signaling is used to activate a target TCI state, and the third field is used to indicate whether the third signaling carries information for the cell handover.

37. The network device of claim 35 or 36, wherein after sending the configuration information of the TCI state of the beam in the candidate cells to the UE, the operations further comprise:
sending a TCI state activation signaling to the UE to enable the UE to activate candidate TCI states indicated by the TCI state activation signaling;
wherein a number of candidate TCI states indicated by the TCI state activation signaling to be activated is less than or equal to a preset number threshold.

38. The network device of claim 32, wherein the cell handover signaling is a fourth signaling used for activating the target cell.

39. An apparatus for cell handover, comprising:
a cell measuring unit, used for performing cell measurements on candidate cells, and sending cell measurement results for the candidate cells to a network device, wherein the cell measurement results are used to determine a target cell;
a signaling receiving unit, used for receiving a cell handover signaling sent from the network device, and determining a target cell indicated by the cell handover signaling, wherein the target cell is one of the candidate cells; and
a cell handover unit, used for performing cell handover based on configuration information of the target cell;
wherein the cell measurement results comprise an absolute value of at least one Layer 1 reference signal receiving power (L1-RSRP), and differential values of at least one L1-RSRP.

40. The apparatus of claim 39, wherein the absolute value of the at least one L1-RSRP is a first absolute value of an L1-RSRP, and the differential values of the at least one L1-RSRP comprise first differential values of L-1 L1-RSRPs and second differential values of (M-1)*L L1-RSRPs;
wherein L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, wherein the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

41. The apparatus of claim 39, wherein the absolute value of the at least one L1-RSRP comprises second absolute values of L L1-RSRPs, and the differential values of the at least one L1-RSRP comprise second differential values of (M-1)*L L1-RSRPs;
wherein L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

42. The apparatus of claim 39, further comprising a configuration receiving unit;
before receiving the cell handover signaling sent from the network device, the configuration receiving unit is used for:
receiving configuration information of a transmission configuration indicator (TCI) state of a beam in the candidate cells sent from the network device;
the signaling receiving unit is used for:
determining the target cell indicated by the cell handover signaling and a target beam, wherein the target beam is a beam of which the TCI state is an activated state in the target cell; and
the cell handover unit is used for:
performing the cell handover based on the configuration information of the target cell and performing beam switching based on configuration information of a TCI state of the target beam.

43. The apparatus of claim 42, wherein the cell handover signaling is a first signaling with a first field; and
the signaling receiving unit is used for:
determining a target beam indicated by the first signaling in case that the first field indicates that the first signaling carries information for cell handover; and
determining a cell to which the target beam belongs as the target cell based on the configuration information of the candidate cell.

44. The apparatus of claim 42, wherein the cell handover signaling is a second signaling with a second field; and
the signaling receiving unit is used for:
determining a target beam indicated by the second signaling and a target cell indicated by the second field in case that the second field indicates that the second signaling carries information for cell handover.

45. The apparatus of claim 42, wherein the cell handover signaling is a third signaling with a third field; and
the signaling receiving unit is used for:
in case that the third field indicates that the third signaling carries information for cell handover, activating a target TCI state based on the third signaling, and determining the target cell and the target beam based on the target TCI state.

46. The apparatus of any of claims 42 to 45, wherein after receiving the configuration information of the TCI state of the beam in the candidate cells sent from the network device, the configuration receiving unit is further used for:
receiving a TCI state activation signaling sent from the network device; and
activating candidate TCI states indicated by the TCI state activation signaling;
wherein a number of candidate TCI states indicated by the TCI state activation signaling to be activated is less than or equal to a preset number threshold.

47. The apparatus of claim 39, wherein the cell handover signaling is a fourth signaling; and
the signaling receiving unit is used for:
determining a cell indicated by the fourth signaling to be activated as the target cell.

48. The apparatus of claim 39 or 47, wherein after performing cell handover based on the configuration information of the target cell, the cell handover unit is further used for:
before receiving a beam switching signaling sent from the network device, determining a default beam for the target cell, and performing information transmission based on the default beam.

49. The apparatus of claim 48, wherein the cell handover unit is used for:
determining a beam used for transmitting a synchronization signal block (SSB) in the target cell as a default beam for downlink transmission, and determining a beam used for random access in the target cell as a default beam for uplink transmission.

50. The apparatus of claim 48, further comprising a configuration receiving unit;
before receiving the cell handover signaling sent from the network device, the configuration receiving unit is used for:
receiving configuration information of a transmission configuration indicator (TCI) state of a beam in the candidate cells sent from the network device; and
the cell handover unit is used for:
determining the default beam based on a sequence number of a TCI state for the target cell.

51. An apparatus for cell handover, comprising:
a configuration sending unit, used for receiving cell measurement results of candidate cells, and determining a target cell based on the cell measurement results; and
a signaling sending unit, used for sending a cell handover signaling to a user equipment (UE), wherein the cell handover signaling is used to indicate a target cell for cell handover, wherein the target cell is one of the candidate cells;
wherein the cell measurement results comprise an absolute value of at least one Layer 1 reference signal receiving power (L1-RSRP), and differential values of at least one L1-RSRP.

52. The apparatus of claim 51, wherein the absolute value of the at least one L1-RSRP is a first absolute value of an L1-RSRP, and the differential values of the at least one L1-RSRP comprise first differential values of L-1 L1-RSRPs and second differential values of (M-1)*L L1-RSRPs;
wherein L is a number of the candidate cells, and M is a number of L1-RSRPs obtained through measurement on one candidate cell;
the first absolute value is a first L1-RSRP for a candidate cell where a maximum value among L1-RSRPs for all candidate cells is located;
the first differential values of the L-1 L1-RSRPs are differential values of first L1-RSRPs for L-1 first candidate cells with respect to the first absolute value, wherein the first candidate cells are candidate cells other than a candidate cell where the first absolute value is located; and
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

53. The apparatus of claim 51, wherein the absolute value of the at least one L1-RSRP comprises second absolute values of L L1-RSRPs, and the differential values of the at least one L1-RSRP comprise second differential values of (M-1)*L L1-RSRPs;
wherein L is a number of the candidate cells, and M is a number of L1-RSRPs obtained through measurement on one candidate cell;
the second absolute values of the L L1-RSRPs are first L1-RSRPs for L candidate cells;
the second differential values of (M-1)*L L1-RSRPs are differential values of M-1 L1-RSRPs with respect to a first L1-RSRP on L candidate cells respectively, wherein the M-1 L1-RSRPs are L1-RSRPs among M L1-RSRPs other than the first L1-RSRP for a candidate cell.

54. The apparatus of claim 51, wherein before sending the cell handover signaling to the UE, the configuration sending unit is further used for:
sending configuration information of a transmission configuration indicator (TCI) state of a beam in the candidate cells to the UE.

55. The apparatus of claim 51, wherein the cell handover signaling is a first signaling with a first field; the first signaling is used to indicate a target beam and the first field is used to indicate whether the first signaling carries information for cell handover; or
the cell handover signaling is a second signaling with a second field; the second signaling is used to indicate a target beam, the second field is used to indicate whether the second signaling carries information for cell handover, and the second field is further used to indicate the target cell; or
wherein the cell handover signaling is a third signaling carrying a third field, wherein the third signaling is used to activate a target TCI state, and the third field is used to indicate whether the third signaling carries information for the cell handover.

56. The apparatus of claim 54 or 55, wherein after sending the configuration information of the TCI state of the beam in the candidate cells to the UE, the signaling sending unit is further used for:
sending a TCI state activation signaling to the UE to enable the UE to activate candidate TCI states indicated by the TCI state activation signaling;
wherein a number of candidate TCI states indicated by the TCI state activation signaling to be activated is less than or equal to a preset number threshold.

57. The apparatus of claim 51, wherein the cell handover signaling is a fourth signaling used for activating the target cell.

58. A processor-readable storage medium, wherein the processor-readable storage medium stores a computer program, and the computer program is used for causing a processor to perform the method for cell handover of any of claims 1 to 19.
